# EUROPÄISCHE PATENTANMELDUNG

(11) **EP 4 825 912 A1**
(43) Veröffentlichungstag der Anmeldung: **21.10.2026**
(21) Anmeldenummer: 26170936.4
(22) Anmeldetag: 07.04.2026
(51) Int. Cl.: C08L 9/06, B60C 1/00

(54) **SCHWEFELVERNETZBARE KAUTSCHUKMISCHUNG FÜR EIN REIFENBAUTEIL, ENTSPRECHENDES VULKANISAT UND REIFENBAUTEIL SOWIE ENTSPRECHENDER FAHRZEUGREIFEN**

(30) Priorität: 11.04.2025 DE 102025114371
(71) Anmelder: Continental Reifen Deutschland GmbH, 30175 Hannover (DE)
(72) Erfinder: Schmidt, Philipp, 30175 Hannover (DE); Jacob, Andreas, 30175 Hannover (DE); Strohmeier, Julian, 30175 Hannover (DE); Haubold, Thorben Soeren, 30175 Hannover (DE); Fleck, Frank, 30175 Hannover (DE); Recker, Carla, 30175 Hannover (DE)
(74) Vertreter: Continental Corporation

(57) **Zusammenfassung**

Die Erfindung betrifft eine schwefelvernetzbare Kautschukmischung für ein Reifenbauteil oder Teil eines Reifenbauteils, ein entsprechendes Vulkanisat, entsprechende Reifenbauteile sowie einen Fahrzeugreifen, der ein, zwei oder mehr als zwei solcher Reifenbauteile aufweist, die Mischung umfassend
(a) einen oder mehr als einen Polyisopren-Kautschuk in einer Gesamtmenge in einem Bereich von 0 bis 70 phr;
(b) in einer Gesamtmenge in einem Bereich von 30 bis 100 phr, einen oder mehr als einen von (a) verschiedenen Dienkautschuk ausgewählt aus der Gruppe bestehend aus Butadien-Kautschuke (BR) und Styrol-Butadien-Kautschuke (SBR), mit der Maßgabe, dass
- die Kautschukmischung eine Gesamtmenge von 25 bis 90 phr Styrol-Butadien-Kautschuk umfasst, und
- die Gesamtmenge aus (a) und (b) 100 phr beträgt;

(c) eine oder mehr als eine Verbindung der Formel (I) wie im Text weiter definiert 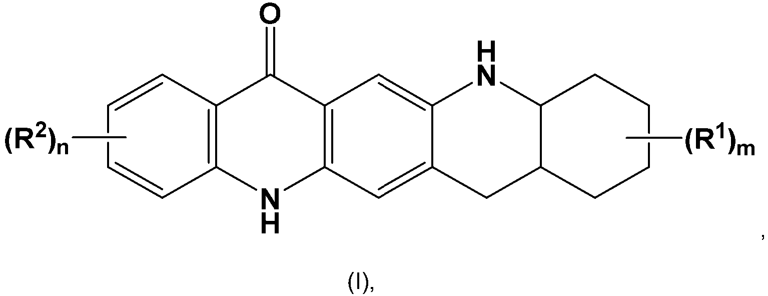 und
(d) eine oder mehr als eine Kieselsäure als Füllstoff in einer Gesamtmenge in einem Bereich von 50 bis 250 phr.

## Beschreibung

Die Erfindung betrifft eine schwefelvernetzbare Kautschukmischung für ein Reifenbauteil oder Teil eines Reifenbauteils, ein entsprechendes Vulkanisat, entsprechende Reifenbauteile sowie einen Fahrzeugreifen, der ein, zwei oder mehr als zwei solcher Reifenbauteile aufweist, die Mischung umfassend
(a) einen oder mehr als einen Polyisopren-Kautschuk in einer Gesamtmenge in einem Bereich von 0 bis 70 phr;
(b) in einer Gesamtmenge in einem Bereich von 30 bis 100 phr, einen oder mehr als einen von (a) verschiedenen Dienkautschuk ausgewählt aus der Gruppe bestehend aus Butadien-Kautschuke (BR) und Styrol-Butadien-Kautschuke (SBR), mit der Maßgabe, dass
   - die Kautschukmischung eine Gesamtmenge von 25 bis 90 phr Styrol-Butadien-Kautschuk umfasst, und
   - die Gesamtmenge aus (a) und (b) 100 phr beträgt;
(c) eine oder mehr als eine Verbindung der Formel (I) wie im Text weiter definiert 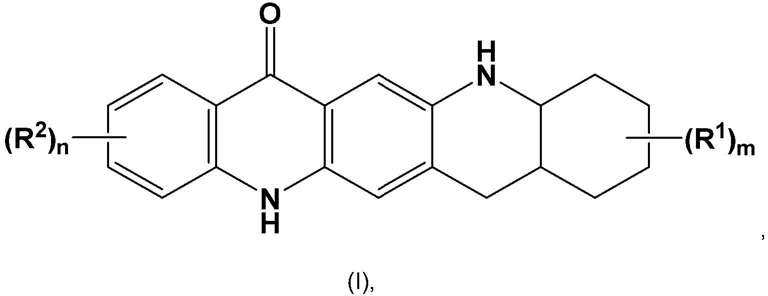 und
(d) eine oder mehr als eine Kieselsäure als Füllstoff in einer Gesamtmenge in einem Bereich von 50 bis 250 phr.

Die Verbindung der Formel (I), vorzugsweise alle Ausführungen davon, die nachfolgend als bevorzugt beschrieben werden, inkl. der Verbindung der Formel (II), dienen als Alterungsschutzmittel in der erfindungsgemäßen Kautschukmischung, vorzugsweise als ein gegenüber 6PPD mit verbesserter Wirkung wirkendes Alterungsschutzmittel.

Es ist bekannt, dass in Fahrzeugreifen polymere Verbindungen, insbesondere Kautschuke, eingesetzt werden. Naturkautschuk (NR), synthetische Polymere (beispielsweise **IR,** BR, SSBR, ESBR, etc.) aber auch natürliche sowie synthetische Öle und Harze unterliegen bei längerer Lagerung und häufig konkret in der Zielanwendung, die oft bei höheren Temperaturen abläuft, Oxidationsreaktionen, die sich nachteilig auf die ursprünglich gewünschten Eigenschaften auswirken. Je nach Art der Kautschuke leiden diese mehr oder weniger unter Brüchen in der Polymerkette, so dass eine nachträgliche, unerwünschte Härtung des Materials bzw. Artikels eintritt.

Alterungsschutzmittel tragen daher aufgrund ihrer antioxidativen Wirkung maßgeblich zu einer verbesserten Langlebigkeit von entsprechenden Zusammensetzungen bzw. Fahrzeugreifen bei.

Typische Alterungsschutzmittel sind aromatische Amine, wie beispielsweise 6PPD (N-(1,3-Dimethylbutyl)-N'-phenyl-p-phenylendiamin), IPPD (N-Isopropyl-N'-phenyl-p-phenylendiamin) oder SPPD (N-(1-phenylethyl)-N'-phenyl-p-phenylendiamin). Diese Verbindungen im Besonderen und Alterungsschutzmittel im Allgemeinen können mit Sauerstoff, Ozon und/oder Radikalen, vorzugsweise Alkyl-, Alkoxy- und Alkylperoxyradikalen, reagieren und diese abfangen und somit die polymeren bzw. langkettigen Verbindungen, die typischerweise in den Kautschuken vorliegen, vor insbesondere unerwünschten Oxidations- und radikalischen Reaktionen schützen. Alterungsschutzmittel, die mit Ozon reagieren bzw. dieses abfangen, werden häufig auch spezifisch "Ozonschutzmittel" oder "Antiozonant" genannt.

Nachteil der oben genannten Verbindungen ist allerdings der Verdacht, dass diese krebserregend und/oder umweltschädlich sein könnten. Daher ist es ein regelmäßiges Bedürfnis neue Alterungsschutzmittel mit mindestens ähnlichem Alterungsschutz bereitzustellen, aber eine potentiell geringere Belastung für die Umwelt darstellen.

Zudem zeigen klassische Antioxidationsmittel durchaus eine signifikante Affinität an der Oberfläche von Kieselsäurepartikel zu adsorbieren, was in vielen Anwendungsfällen durchaus als Vorteil betrachtet wird. Dies führt jedoch zu einer Immobilisierung der Moleküle und vermindert scheinbar die Schutzwirkung insbesondere in Kautschukmischungen. Um dem entgegenzuwirken, muss die Gesamtmenge an Alterungsschutzmittel in solchen Mischungen entsprechend eingestellt werden, um einen ausreichenden Schutz über einen adäquaten Zeitraum zu erzielen.

Es ist somit ein weiteres regelmäßiges Bedürfnis, Alterungsschutzmittel zu identifizieren, die insgesamt effektiver wirken, so dass die Arbeitskonzentration insbesondere in kieselsäurehaltigen Kautschukmischungen entweder gesenkt werden kann oder bei gleichbleibender Konzentration verbessert wird.

Alternative Alterungsschutzmittel sind durchaus bekannt. So offenbart WO 2023/143677 A1 Alterungsschutzmittel auf Acridon-Basis für Kautschukmischungen.

In der Praxis müssen solche neuen Alterungsschutzmittel jedoch nicht nur eine ausreichend lange Wirkung (idealerweise über die Lebensdauer eines Reifens), sondern auch bei adäquater Einsatzmenge eine ausreichend starke Schutzwirkung über diesen Zeitraum erzielen. Dabei spielen neben den Faktoren wie Löslichkeit und Diffusion innerhalb der vulkanisierten Kautschukmischung auch das Adsorptionsverhalten der Verbindungen an Kieselsäure eine bedeutende Rolle.

Der vorliegenden Erfindung liegt die Aufgabe zugrunde, insbesondere von 6PPD verschiedene Verbindungen bereitzustellen, die neben einer potentiell geringeren Umweltbelastung sowohl einen ausreichend langanhaltenden als auch ausreichend starken Alterungsschutz in entsprechenden Reifenbauteilen bereitstellen, die Kieselsäure als Füllstoff einsetzen. Zudem sollen die Verbindungen einen tatsächlichen Einsatz in der Praxis ermöglichen und in Wechselwirkung mit anderen Mischungsbestandteilen keine negativen Effekte hervorrufen. Dies ist insbesondere wichtig mit Blick auf komplexe Kautschukmischungen, wie beispielsweise Laufstreifen (oder Bestandteile dessen, wie beispielsweise eine Cap bzw. eine Base), Seitenwände, Hornprofile und Apexe.

Gelöst wird diese Aufgabe durch die erfindungsgemäße schwefelvernetzbare Kautschukmischung für ein Reifenbauteil oder Teil eines Reifenbauteils, die Mischung umfassend
(a) einen oder mehr als einen Polyisopren-Kautschuk in einer Gesamtmenge in einem Bereich von 0 bis 70 phr;
(b) in einer Gesamtmenge in einem Bereich von 30 bis 100 phr, einen oder mehr als einen von (a) verschiedenen Dienkautschuk ausgewählt aus der Gruppe bestehend aus Butadien-Kautschuke (BR) und Styrol-Butadien-Kautschuke (SBR), mit der Maßgabe, dass
   - die Kautschukmischung eine Gesamtmenge von 25, vorzugsweise 30, bis 90 phr Styrol-Butadien-Kautschuk umfasst, und
   - die Gesamtmenge aus (a) und (b) 100 phr beträgt;
(c) eine oder mehr als eine Verbindung der Formel (I) 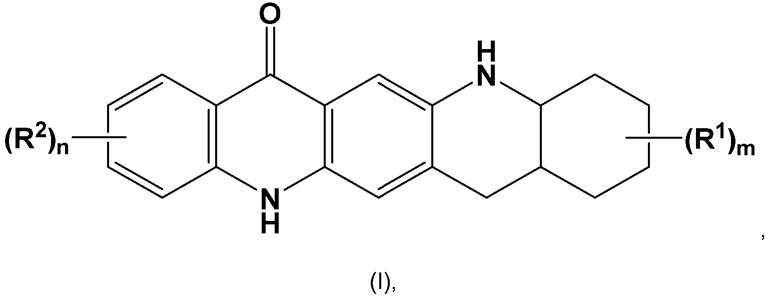 wobei
   R¹ an der äußeren Cyclohexan-Gruppe und/oder der benachbarten Piperidin-Gruppe gebunden ist und unabhängig voneinander ausgewählt ist aus der Gruppe bestehend aus
      xi) C₁- bis C₄-Alkyl-Resten und C₁- bis C₄-Alkoxy-Resten,
      und
   der Rest R² unabhängig voneinander ausgewählt ist aus der Gruppe bestehend aus
      aliphatischen C₁- bis C₁₂-Resten, aromatischen Resten, Halogen-Resten, Cyano-Resten, Ester-Resten, Keton-Resten, Ether-Resten und Thioether-Resten,
      und wobei
   n den Wert 0 oder 1 oder 2 oder 3 oder 4 annimmt und die Reste R² im Fall von n gleich 2 oder 3 oder 4 unabhängig voneinander gleich oder verschieden sind, und
   m eine ganze Zahl in einem Bereich von 1 bis 12 ist, wobei die Reste R¹ im Fall von m gleich 2 oder größer unabhängig voneinander gleich oder verschieden sind;
(d) eine oder mehr als eine Kieselsäure als Füllstoff in einer Gesamtmenge in einem Bereich von 50 bis 250 phr.

Die erfindungsgemäße Kautschukmischung enthält ein Acridon-Derivat als Alterungsschutzmittel und weist gegenüber Kautschukmischungen mit dem sehr bekannten 6PPD nicht nur ein geringeres Gefahrenpotential auf (6PPD bzw. Abbauprodukte davon werden als toxisch für den Silberlachs eingestuft), sondern zusätzlich eine gegenüber 6PPD qualitativ verbesserte Schutzwirkung, wenn es in Kautschukmischungen eingesetzt wird, die eine oder mehr als eine Kieselsäure in signifikanten Mengen enthält. Obwohl aus der WO 2023/143677 A1 bereits eine verbesserte Langzeitwirkung in eher einfachen Kautschukmischungen gegenüber 6PPD beschrieben wurde, wurde nun überraschend festgestellt, dass Acridon-Derivate insbesondere in kieselsäurehaltigen Kautschukmischungen, ganz besonders in einem Bereich von 50 bis 250 phr, eine insbesondere qualitative Verbesserung des Alterungsschutzes bewirken (siehe Beispiele unten). Typischerweise zeigen gerade kieselsäurehaltige Kautschukmischungen eine leider unvermeidbare Adsorption von Alterungsschutzmitteln an der Oberfläche der Kieselsäurepartikel. Eigene Untersuchungen legen nun nahe, dass die hier erfindungsgemäß eingesetzten Alterungsschutzmittel eine geringere Affinität gegenüber der polaren Kieselsäureoberfläche aufweisen. Dies ist insofern überraschend, da interne Untersuchungen zum Bindungsverhalten der Acridone einen solchen Effekt nicht nahegelegt haben. Im Kontext der vorliegenden Erfindung gilt jedoch grundsätzlich, dass die Erfindung nicht an einen bestimmten Wirkmechanismus oder eine bestimmte Erklärung gebunden sein soll.

Im Kontext der vorliegenden Erfindung bedeutet die verwendete Angabe phr (parts per hundred parts of rubber by weight) die in der Kautschukindustrie übliche Mengenangabe für Mischungen. Die Dosierung der Gewichtsteile wird dabei stets auf 100 Gewichtsteile der gesamten Masse aller in der Mischung vorhandenen festen Kautschuke bezogen bzw. referenziert.

Im Kontext der vorliegenden Erfindung gilt, dass sämtliche bevorzugte Ausgestaltungen, die sich unter anderem in den Patentansprüchen widerspiegeln, ebenfalls mit umfasst sind. Insbesondere sind von der Erfindung auch Ausgestaltungen umfasst und gelten als offenbart, die sich durch Kombination unterschiedlicher Merkmale ergeben (auch mit jeweils unterschiedlicher Abstufung bei der Bevorzugung dieser Merkmale), sodass auch eine Kombination eines ersten als "bevorzugt" bezeichneten Merkmals mit einem zweiten als z. B. "besonders bevorzugt" bezeichneten Merkmals von der Erfindung umfasst und offenbart ist.

Nachfolgend wird die schwefelvernetzbare Kautschukmischung im Detail beschrieben.

Die erfindungsgemäße Kautschukmischung ist für Laufstreifen, Seitenwände, Hornprofile und Apexe besonders geeignet. Daher ist die erfindungsgemäße Kautschukmischung gleichermaßen als Laufstreifenmischung, Seitenwandmischung, Hornprofilmischung bzw. Apexmischung zu bezeichnen.

Kautschukmischungen mit Kieselsäure als Füllstoff gewinnen zunehmend an Bedeutung und gelten insbesondere für PKW-Laufstreifen inzwischen als etablierter Standard. Sie bewirken regelmäßig einen sehr guten (d.h. vergleichsweise geringen) Abrieb und erzielen eine möglichst geringe Hysterese, d.h. geringe Wärmeentwicklung und somit letztendlich einen geringen Rollwiderstand im Reifen. In anderen Reifenbauteilen sind rußhaltige Kautschukmischungen hingegen weitestgehend noch der etablierte Standard. Dennoch setzen sich auch hier mehr und mehr kieselsäurehaltige Kautschukmischungen durch. Insbesondere die vorteilhaften Hystereseeigenschaften, die man aus Laufstreifen bereits kennt, möchte man zunehmend auch auf Seitenwände und sonstige innere Bauteile ausweiten. Aufgrund der lateralen Bewegung im Reifen bei beispielsweise Kurvenfahrten, spielen insbesondere die Seitenwände (aber auch sonstige innere Bauteile) eine zunehmende Bedeutung bei der Hysterese- und Steifigkeitsoptimierung.

Für die unterschiedlichen Anwendungen kommen, trotz der Gemeinsamkeit beim Füllstoff Kieselsäure, typischerweise verschiedene Kautschukkombinationen zum Einsatz.

Die erfindungsgemäße Kautschukmischung umfasst gemäß (a) einen oder mehr als einen Polyisopren-Kautschuk in einer Gesamtmenge in einem Bereich von 0 bis 70 phr. Vorzugsweise handelt es sich dabei um feste Kautschuke, referenziert auf eine Temperatur von 25°C. Dies bedeutet grundsätzlich, dass der Kautschuk gemäß (a) optional ist. In einigen Fällen ist eine erfindungsgemäße Kautschukmischung bevorzugt, die den einen oder mehr als einen Polyisoprenkautschuk gemäß (a) enthält; dies sorgt für eine besonders gute Reißfestigkeit. In anderen erfindungsgemäßen Kautschukmischungen umfasst diese keinen Polyisoprenkautschuk (d.h. eine Gesamtmenge von 0 phr) oder nur unbedeutende, als Verunreinigung eingetragene Mengen, vorzugsweise in einer Gesamtmenge von größer 0 (Null) bis 1 phr, besonders bevorzugt größer 0 (Null) bis 0,5 phr.

Bevorzugt ist eine erfindungsgemäße Kautschukmischung, vorzugsweise wie als bevorzugt beschrieben, wobei der eine oder mehr als eine Polyisopren-Kautschuk gemäß (a) mindestens einen natürlichen Polyisopren-Kautschuk (auch bekannt als und gleichbedeutend mit den Begriffen Naturkautschuk oder natürlicher Kautschuk: abgekürzt mit "NR"), mindestens einen synthetischen Polyisopren-Kautschuk (abgekürzt mit "IR") und/oder mindestens einen epoxidierten Polyisopren-Kautschuk (ENR) umfasst; vorzugsweise mindestens einen natürlichen Polyisopren-Kautschuk (NR) und/oder mindestens einen synthetischen Polyisopren-Kautschuk (IR), besonders bevorzugt mindestens einen natürlichen Polyisopren-Kautschuk (NR). Vorzugsweise umfasst der eine oder mehr als eine Polyisopren-Kautschuk gemäß (a) ausschließlich einen oder mehr als einen natürlichen Polyisopren-Kautschuk (NR), besonders bevorzugt wie nachfolgend als bevorzugt beschrieben.

Natürliches Polyisopren (NR) bedeutet einen Kautschuk, der durch Ernte von natürlichen Quellen wie Kautschukbäumen (Hevea brasiliensis) oder nicht-Kautschukbaumquellen (wie z. B. Guayule oder Löwenzahn (z. B. Taraxacum koksaghyz)) gewonnen wird. Zudem wird im Kontext der vorliegenden Erfindung unter natürlichem Polyisopren (NR) kein synthetisches Polyisopren (IR) verstanden, sondern ist davon zu unterscheiden.

Vorzugsweise umfasst der eine oder mehr als eine Polyisopren-Kautschuk gemäß (a) mindestens einen *cis*-1,4-Polyisopren-Kautschuk und/oder mindestens einen 3,4-Polyisopren-Kautschuk. Dies gilt vorzugsweise unabhängig davon, ob es sich um einen natürlichen oder synthetischen Polyisopren-Kautschuk handelt. Bevorzugt ist mindestens ein *cis*-1,4-Polyisopren-Kautschuk mit besonders bevorzugt einem *cis*-1,4 Anteil größer 90 Gew.-%. Solch ein Polyisopren-Kautschuk wird vorzugsweise durch stereospezifische Polymerisation in Lösung mit Ziegler-Natta-Katalysatoren oder unter Verwendung von fein verteiltem Lithiumalkylen erhalten. Weiterhin handelt es sich typischerweise auch bei Naturkautschuk (NR) um einen solchen *cis*-1,4 Polyisopren-Kautschuk. Besonders bevorzugt ist daher mindestens ein Naturkautschuk (NR) umfassend mindestens einen cis-1,4-Polyisopren-Kautschuk, vorzugsweise mit einem cis-1,4-Anteil größer oder gleich 99 Gew.-%.

Der eine oder mehr als eine Polyisopren-Kautschuk gemäß (a) weist vorzugsweise ein gewichtsmittleres Molekulargewicht Mw gemäß GPC in einem Bereich von 250.000 bis 5.000.000 g/mol auf. Es gehört somit zu den hochmolekularen Kautschuken, die in die Hundert Teile bei der Berechnung der phr-Bezugsgröße eingehen.

Demgegenüber ist der von (a) verschiedene Dienkautschuk gemäß (b) zwingend in der erfindungsgemäßen Kautschukmischung enthalten und somit nicht optional. Typischerweise verbessern diese Kautschuke allgemein das Nassbremsverhalten bzw. den Grip eines Reifens. Im Kontext der vorliegenden Erfindung ist ein Dienkautschuk durch Polymerisation oder Copolymerisation von Dienen und/oder Cycloalkenen entstanden und weist somit entweder in der Hauptkette oder in den Seitenketten C=C-Doppelbindungen auf. Typische Monomere für eine Polymerisation umfassen Isopren und Butadien.

Vorzugsweise handelt es sich bei dem einen oder mehr als einen von (a) verschiedenen Dienkautschuk gemäß (b) um feste Dienkautschuke, referenziert auf eine Temperatur von 25°C.

Der von (a) verschiedene Dienkautschuk gemäß (b) ist ausgewählt aus der Gruppe bestehend aus Butadien-Kautschuke (BR) und Styrol-Butadien-Kautschuke (SBR), wobei zwingend die Gesamtmenge an Styrol-Butadien-Kautschuk (d.h. die Menge eines einzelnen SBR, sofern es nur ein einziger ist oder die Menge sämtlicher SBR, sofern es mehr als ein SBR ist) 25 bis 90 phr, vorzugsweise wie im Text als bevorzugt definiert, beträgt. Mit anderen Worten, die erfindungsgemäße Kautschukmischung umfasst immer mindestens einen Styrol-Butadien-Kautschuk, maximal in einer Gesamtmenge von 90 phr, vorzugsweise wie im Text sonst definiert. Das bedeutet zudem, dass die restlichen 10 phr durch ein anderes Polymer beigetragen werden. Die erfindungsgemäße Kautschukmischung schließt somit einen Mono-Blend aus Styrol-Butadien-Kautschuk(en) explizit aus. Im Kontext der vorliegenden Erfindung liegt immer mindestens ein sogenannter Di-Blend vor, d.h. eine Kautschukmischung umfassend mindestens einen oder mehr als einen weiteren, von Styrol-Butadien-Kautschuk(en) verschiedenen, Kautschuk.

In einigen Fällen ist eine erfindungsgemäße Kautschukmischung bevorzugt, wobei diese neben dem einen oder mehr als einen Styrol-Butadien-Kautschuk zusätzlich ein oder mehr als einen Butadien-Kautschuk (BR) enthält. In diesem Fall beträgt die Gesamtmenge an (b) 100 phr und die Menge an (a) 0 (Null) phr. Weiter bedeutet dies vorzugsweise, dass die Gesamtmenge an Styrol-Butadien-Kautschuk (SBR) mindestens 25 phr beträgt und maximal 90 phr. Die Gesamtmenge an Butadien-Kautschuken beträgt somit mindestens 10 phr und maximal 75 phr. In jedem dieser Fälle resultiert vorzugsweise ein sogenannter Di-Blend.

In anderen Fällen ist eine erfindungsgemäße Kautschukmischung bevorzugt, wobei diese neben dem einen oder mehr als einen Styrol-Butadien-Kautschuk zusätzlich einen oder mehr als einen Polyisopren-Kautschuk enthält. In diesem Fall beträgt die Gesamtmenge an (b) mindestens 30 phr aber weniger als 100 phr und die Menge an (a) mehr als 0 (Null) phr aber maximal 70 phr, mit der Maßgabe, dass die Gesamtmenge aus (a) und (b) 100 phr beträgt. Sofern die Gesamtmenge an Styrol-Butadien-Kautschuken (SBR) identisch ist mit der Gesamtmenge von (b) (d.h. mindestens 30 phr), resultiert ein Di-Blend aus Styrol-Butadien-Kautschuk(en) und Polyisopren-Kautschuk(en). Sofern Die Gesamtmenge an Styrol-Butadien-Kautschuken (SBR) geringer ist als die Gesamtmenge von (b), entfällt eine entsprechende Differenz auf den einen oder mehr als einen Butadien-Kautschuk (BR), so dass im Ergebnis ein Tri-Blend aus Polyisopren-Kautschuk(en), Styrol-Butadien-Kautschuk(en) und Butadien-Kautschuk(en) resultiert.

Im Kontext der vorliegenden Erfindung ist ein Di-Blend gegenüber einem Tri-Blend geringfügig bevorzugt.

In einigen Fällen gilt besonders vorzugsweise, dass die Gesamtmenge an (a) kleiner als die Gesamtmenge an (b) ist. In anderen Fällen ist es besonders bevorzugt, dass die Gesamtmenge an (a) größer als die Gesamtmenge an (b) ist. Die Gesamtmenge an (a) beeinflusst beispielsweise die Reißfestigkeit eines resultierenden Vulkanisats, wobei die Reißfestigkeit mit zunehmender Gesamtmenge (a) ebenfalls steigt. Zudem hat die Gesamtmenge an (a) unter anderem einen Einfluss auf die durchschnittliche Gesamtglasübergangstemperatur der Kautschukmischung, die ihrerseits eine Anpassung von Eigenschaften wie Grip und Abrieb bei unterschiedlichen Temperaturen erlaubt.

Besonders bevorzugt umfasst der Styrol-Butadien-Kautschuk gemäß (b) grundsätzlich einen oder mehr als einen emulsionspolymerisierten Styrol-Butadien-Kautschuk (ESBR) und/oder einen oder mehr als einen lösungspolymerisierten Styrol-Butadien-Kautschuk (SSBR), besonders bevorzugt einen oder mehr als einen lösungspolymerisierten Styrol-Butadien-Kautschuk (SSBR). Bei den Styrol-Butadien-Kautschuken (SBR) handelt es sich vorzugsweise um feste Styrol-Butadien-Kautschuke (SBR), referenziert auf eine Temperatur von 25°C.

Besonders bevorzugt umfasst der Butadien-Kautschuk (BR) gemäß (b) einen sogenannten hoch-cis Butadien-Kautschuk (BR), vorzugsweise mit einem cis-Anteil von 90% oder mehr, besonders bevorzugt von 95% oder mehr, ganz besonders bevorzugt von 98% oder mehr.

In vielen Fällen ist eine erfindungsgemäße Kautschukmischung generell bevorzugt, vorzugsweise wie als bevorzugt beschreiben, wobei der eine oder mehr als eine von (a) verschiedenen Dienkautschuk jeweils ein gewichtsmittleres Molekulargewicht Mw gemäß GPC in einem Bereich von 150.000 bis 1.100.000 g/mol aufweist.

In manchen Fällen ist eine erfindungsgemäße Kautschukmischung bevorzugt, vorzugsweise wie als bevorzugt beschrieben, wobei einer, mehrere oder alle des einen oder mehr als einen von (a) verschiedenen Dienkautschuks gemäß (b) durch Substituenten modifiziert ist, so dass ein modifizierter Dienkautschuk resultiert. Vorzugsweise handelt es sich um einen oder mehrere Substituenten, welche vorzugsweise am Polymer-Rückgrat und/oder endständig vorliegen. Diese Substituenten bewirken besonders bevorzugt eine signifikante Wechselwirkung mit der einen oder mehr als einen Kieselsäue gemäß (d) und insbesondere den polaren funktionellen Gruppen auf deren Oberfläche. Solche Kautschuke werden typischerweise auch funktionalisierte Kautschuke genannt.

Vorzugsweise sind diese Substituenten (d.h. für Kautschuke gemäß (b)) unabhängig voneinander ausgewählt aus der Gruppe bestehend aus Hydroxy-Gruppen, EthoxyGruppen, Epoxy-Gruppen, Amino-Gruppen, Ammonium-Gruppen, Aminosiloxan-Gruppen, Carboxy-Gruppen, Phthalocyanin-Gruppen und Silicium-enthaltende Gruppen. Bevorzugte Silicium-enthaltende Gruppen umfassen Silan und/oder Siloxan-Gruppen. Die Auswahl der Substituenten ist jedoch vorzugsweise nicht auf die vorstehend genannten beschränkt. In einigen Fällen umfassen die Substituenten zudem vorzugsweise ein oder mehrere Metalle, umfassend Metallatome und/oder Metallionen. Insbesondere die Amino- und Ammonium-Gruppen treten vorzugsweise mit Rußen in Wechselwirkung, sofern die erfindungsgemäße Kautschukmischung einen Ruß umfasst (siehe unten im Text).

In anderen Fällen ist eine erfindungsgemäße Kautschukmischung bevorzugt, vorzugsweise wie als bevorzugt beschrieben, wobei der eine oder mehr als eine von (a) verschiedene Dienkautschuk (d.h. gemäß (b)) nicht durch Substituenten modifiziert ist, d.h. es liegen unmodifizierte bzw. unfunktionalisierte Kautschuke für (b) vor. In wieder anderen Fällen ist es bevorzugt, dass sowohl funktionalisierte als auch unfunktionalisierte Kautschuke vorliegen.

Die Glasübergangstemperatur T_{g} eines eingesetzten Kautschuks hat typischerweise einen Einfluss auf die Wärmeentwicklung bzw. Hysterese der entsprechenden Kautschukmischung und somit letztendlich auch auf den Rollwiderstand des gesamten Reifens. Bevorzugt ist eine erfindungsgemäße Kautschukmischung, vorzugsweise wie als bevorzugt beschrieben, wobei der eine oder mehr als eine von (a) verschiedene Dienkautschuk gemäß (b) jeweils eine individuelle Glasübergangstemperatur T_{g} in einem Bereich von -15 bis -120 °C aufweist, vorzugsweise von -20 bis -110 °C, weiter bevorzugt von -30 bis -100 °C, noch bevorzugter von -36 bis -93 °C, noch weiter bevorzugt von -41 bis -86 °C, am bevorzugtesten von -48 bis -78 °C, am weiter bevorzugtesten von -55 bis -70 °C.

Im Kontext der vorliegenden Erfindung wird die Glasübergangstemperatur T_{g} der Polymere bzw. Kautschuke anhand von Dynamischer Differenz-Kalorimetrie bestimmt (DSC, engl. Dynamic Scanning Calorimetry, gemäß DIN 53765: 1994-03 bzw. ISO 11357-2: 1999-03, Kalibrierte DSC mit Tieftemperatureinrichtung, Kalibrierung nach Gerätetyp und Herstellerangaben, Probe im Aluminiumtiegel mit Aluminiumdeckel, Abkühlung auf Temperaturen niedriger als -120 °C mit 10 °C/min).

Nachfolgend werden für die vorliegende erfindungsgemäße Kautschukmischung besonders bevorzugte Ausgestaltungen bei den Kautschuken beschrieben.

In einigen Fällen ist eine erfindungsgemäße Kautschukmischung besonders bevorzugt, vorzugsweise wie im vorliegenden Text als bevorzugt beschrieben, wobei gilt:
für (a) eine Gesamtmenge von 0 bis 30 phr; und
für (b) eine Gesamtmenge von 70 bis 100 phr, mit der Maßgabe, dass die Kautschukmischung eine Gesamtmenge von 65, vorzugsweise 70, bis 90 phr Styrol-Butadien-Kautschuk umfasst.

Bevorzugt ist in diesem Fall eine erfindungsgemäße Kautschukmischung, wobei für die Gesamtmenge von (a) gilt, dass sie entweder 0 (Null) ist oder als Untergrenze größer 0 (Null) ist, vorzugsweise 5 phr oder größer; und bevorzugt bis maximal 30 phr. Dies bedeutet, dass in diesem Fall die Gesamtmenge an (b) und respektive die Gesamtmenge an Styrol-Butadien-Kautschuk(en) vergleichsweise hoch ist, vorzugsweise um die 80 phr.

Sofern die Gesamtmenge von (a) größer 0 (Null), 5 phr oder noch größer ist, liegt sie besonders bevorzugt im Bereich von 10 bis 28 phr, ganz besonders bevorzugt von 12 bis 26 phr, am bevorzugtesten von 14 bis 24 phr. Die korrespondierende Gesamtmenge von (b) ergibt sich daraus entsprechend unter der Maßgabe, dass (a) zusammen mit (b) 100 phr beträgt. In diesem Zusammenhang liegt die Gesamtmenge an Styrol-Butadien-Kautschuk(en) vorzugsweise in einer Gesamtmenge in einem Bereich von 70 bis 85 phr vor, besonders bevorzugt von 75 bis 85 phr. Weiterhin bevorzugt ist in diesem Fall, dass (a) einen oder mehr als einen natürlichen Polyisopren-Kautschuk umfasst, vorzugsweise ausschließlich einen oder mehr als einen solchen. Vorzugsweise resultiert ein Di-Blend, wobei besonders bevorzugt die Gesamtmenge an (b) 72 bis 90 phr beträgt, vorzugsweise 74 bis 88 phr, besonders bevorzugt von 76 bis 86 phr; insbesondere bevorzugt gilt dies für die Gesamtmenge an Styrol-Butadien-Kautschuk(en) entsprechend. Der bevorzugte Di-Blend ist somit vorzugsweise ein Polyisopren bzw. NR / SBR Di-Blend.

Sofern die Gesamtmenge von (a) kleiner 5 phr oder 0 (Null) ist, ist die Gesamtmenge an (b) respektive größer 95 phr oder 100 phr. Die Gesamtmenge an Styrol-Butadien-Kautschuk(en) (SBR) liegt in einem Bereich von 65 bis 90 phr, vorzugsweise von 70 bis 85 phr vor, besonders bevorzugt von 75 bis 85 phr. Die verbleibende Mengendifferenz, um die Gesamtmenge von (b) zu erreichen, wird durch Butadien-Kautschuk(e) (BR) aufgefüllt. Besonders bevorzugt beträgt die Gesamtmenge an Butadien-Kautschuk(en) (BR) 10 bis 35 phr, vorzugsweise 15 bis 30 phr, besonders bevorzugt 15 bis 25 phr, sofern die Gesamtmenge an (a) 0 (Null) ist; oder eine um die Gesamtmenge an (a) reduzierte Gesamtmenge an Butadien-Kautschuk(en) (BR) wie vorstehend definiert, sofern (a) vorhanden ist und die Gesamtmenge an (a) kleiner 5 phr ist. Vorzugsweise resultiert auch hier ein Di-Blend, der besonders bevorzugt ein BR / SBR Di-Blend ist.

In diesen bevorzugten Ausführungsformen (in denen die Gesamtmenge an Styrol-Butadien-Kautschuken vergleichsweise hoch ist), wie vorstehend beschrieben, vorzugsweise wie vorstehend als bevorzugt definiert, ist eine erfindungsgemäße Kautschukmischung bevorzugt, wobei die Gesamtmenge von (d) in einem Bereich von 60 bis 210 phr liegt, vorzugsweise von 70 bis 175 phr, besonders bevorzugt von 80 bis 150 phr, am bevorzugtesten von 90 bis 130 phr. Eine ganz besonders bevorzugte Menge liegt in einem Bereich von 115 bis 125 phr.

Diese besonders bevorzugte Ausführungsform einer erfindungsgemäßen Kautschukmischung eignet sich besonders gut für Laufstreifen, vorzugsweise für eine Cap eines Laufstreifens. Erste Untersuchungen deuten zudem einen Einsatz in Seitenwänden oder sonstigen inneren Bauteilen an.

In anderen Fällen ist besonders bevorzugt eine erfindungsgemäße Kautschukmischung, vorzugsweise wie im vorliegenden Text als bevorzugt beschrieben, wobei gilt:
für (a) eine Gesamtmenge von 45 bis 70 phr; und
für (b) eine Gesamtmenge von 30 bis 55 phr, mit der Maßgabe, dass die Kautschukmischung eine Gesamtmenge von 25, vorzugsweise 30 phr, bis 50 phr Styrol-Butadien-Kautschuk umfasst.

In diesen anderen Fällen einer erfindungsgemäßen Kautschukmischung ist neben dem einen oder mehr als einen Styrol-Butadien-Kautschuk zusätzlich ein oder mehr als ein Polyisopren-Kautschuk zwingend vorhanden. Vorzugsweise ist die Gesamtmenge an (a) größer als die Gesamtmenge an (b). Dies bedeutet, dass in diesen anderen Fällen die Gesamtmenge an (b) und respektive die Gesamtmenge an Styrol-Butadien-Kautschuk(en) vergleichsweise niedrig ist, vorzugsweise um die 40 phr, wobei die Gesamtmenge an (a) vergleichsweise hoch ist, vorzugsweise um die 60 phr.

Besonders bevorzugt ist eine erfindungsgemäße Kautschukmischung in diesen anderen Fällen, wobei die Gesamtmenge von (a) in einem Bereich von 51 bis 68 phr liegt, vorzugsweise von 54 bis 66 phr, besonders bevorzugt von 57 bis 64 phr. Weiterhin bevorzugt ist in diesen Fällen, dass (a) einen oder mehr als einen natürlichen Polyisopren-Kautschuk umfasst, vorzugsweise ausschließlich einen oder mehr als einen solchen. Die entsprechenden Gesamtmengen für (b) betragen somit vorzugsweise 32 bis 49 phr, vorzugsweise 34 bis 46 phr, weiter bevorzugt 36 bis 43 phr; besonders bevorzugt gilt dies entsprechend für die Gesamtmenge an Styrol-Butadien-Kautschuk (SBR), so dass ein bevorzugter Di-Blend aus Polyisopren bzw. NR / SBR resultiert, wobei die Gesamtmenge an NR die Gesamtmenge an SBR übersteigt. Sofern die Gesamtmenge an Styrol-Butadien-Kautschuk (SBR) geringer ist als die Gesamtmenge an (b), wird die verbleibende Mengendifferenz, um die Gesamtmenge von (b) zu erreichen, durch Butadien-Kautschuk(e) (BR) aufgefüllt, so dass ein Tri-Blend aus Polyisopren bzw. NR / SBR / BR resultiert.

In diesen bevorzugten Ausführungsformen (in denen die Gesamtmenge an Styrol-Butadien-Kautschuk vergleichsweise gering und die Gesamtmenge an Polyisopren-Kautschuk vergleichsweise hoch ist), wie vorstehend beschrieben, vorzugsweise wie vorstehend als bevorzugt definiert, ist eine erfindungsgemäße Kautschukmischung bevorzugt, wobei die Gesamtmenge (d) in einem Bereich von 50 bis 90 phr liegt, vorzugsweise von 53 bis 82 phr, besonders bevorzugt von 56 bis 74 phr, am bevorzugtesten von 59 bis 69 phr.

Diese besonders bevorzugten Ausführungsformen einer erfindungsgemäßen Kautschukmischung eignen sich besonders gut für Laufstreifen, vorzugsweise für eine Cap eines Laufstreifens als auch nachweislich für Seitenwände, Hornprofile und Apexe, besonders Laufstreifen und Seitenwände.

Unabhängig von den zuvor genannten, besonders bevorzugten Ausgestaltungen umfasst die erfindungsgemäße Kautschukmischung gemäß (c) grundsätzlich eine oder mehr als eine Verbindung der Formel (I). Es handelt sich dabei um ein Alterungsschutzmittel, insbesondere zur Eindämmung radikalischer Reaktionen, die zu Netzwerkschädigungen im vulkanisierten, d.h. schwefelvernetzten Kautschuk führen.

Bevorzugt ist eine erfindungsgemäße Kautschukmischung, vorzugsweise wie als bevorzugt beschrieben, wobei die eine oder mehr als eine Verbindung der Formel (I) in einer Gesamtmenge vorliegt im Bereich von 0,1 bis 10 phr, bevorzugt von 0,3 bis 8,5 phr, weiter bevorzugt von 0,5 bis 7 phr, besonders bevorzugt von 0,75 bis 5,5 phr, ganz besonders bevorzugt von 1 bis 4,5 phr.

Die Indizes m und n beschreiben die Anzahl der entsprechenden Gruppen R¹ und R². Sofern n gleich 0 (Null) ist, ist dieser Rest nicht vorhanden und stattdessen durch ein Wasserstoffatom ersetzt. Vorzugsweise ist R² optional. Der Index m hingegen ist mindestens 1. Somit ist der Rest R¹ nicht optional und mindestens immer einmal vorhanden.

Dem Fachmann ist ebenfalls klar, dass die Darstellung der Verknüpfungen von (R²)ₙ an die 4 möglichen Kohlenstoffe in dem entsprechenden 6-er Ring der Acridongrundstruktur bedeutet. Diese Gruppe ist maximal an jeder denkbaren Stelle im ihr zugeordneten Ring angeordnet.

Im Kontext der vorliegenden Erfindung ist die Gruppe (R¹) an der äußeren Cyclohexan-Gruppe und/oder, vorzugsweise und, der benachbarten Piperidin-Gruppe angebunden. Diese Gruppe ist mindestens einmal vorhanden, vorzugsweise mehrfach und teilt sich vorzugsweise auf beide cyclische Ringstrukturen auf. Vorzugsweise sind zwei R¹-Gruppen am selben Kohlenstoffatom angebunden; besonders bevorzugt sind diese, alternativ oder zusätzlich, identisch.

R¹ ist ausgewählt aus der Gruppe bestehend aus
xi) C₁- bis C₄-Alkyl-Resten und C₁- bis C₄-Alkoxy-Resten.

Im Kontext der vorliegenden Erfindung bedeutet die Bezeichnung "C₃- bis C₁₂-Reste" einen Rest umfassend 3 bis 12 Kohlenstoffatome. Andere Zahlen haben eine dazu entsprechende Bedeutung. Diese Erklärung gilt *mutatis mutandis* für z.B. für C₁- bis C₄-Alkyl-Reste bzw. C₁- bis C₄-Alkoxy-Reste.

Die Verbindung der Formel (I) weist eine hinreichende bis sehr gute Löslichkeit in Laufstreifenmischungen auf, insbesondere zur Anwendung in Fahrzeugreifen. Die Löslichkeit wird vorzugsweise durch geeignete Auswahl der Reste R¹ und/oder R² weiter optimiert. Hierdurch wird ein ungewolltes Ausblühen dieser Verbindung geringgehalten oder sogar weitestgehend verhindert, was wiederum vorteilhaft für die Alterungsschutzwirkung ist. Je weniger an Alterungsschutzmittel ausblüht, desto weniger geht davon beabsichtigt oder unbeabsichtigt über die Oberfläche verloren und desto weniger Alterungsschutzmittel diffundiert wiederum nach. Dies hat auch erhebliche Vorteile für die Umwelt.

Im Kontext der vorliegenden Erfindung gilt grundsätzlich, dass Index n jeweils voneinander unabhängig ist. Das bedeutet zum Beispiel, dass das n in einer ersten Verbindung der Formel (I) unabhängig von einem n in einer zweiten Verbindung der Formel (I) ist. Dies gilt gleichermaßen für Index m. Dies gilt daher insbesondere, wenn mehr als zwei Verbindungen der Formel (I) vorliegen. Dieser Grundsatz findet außerdem Anwendung, wenn die Indizes n und/oder m innerhalb einer einzelnen Verbindung der Formel (I) größer 1 sind. Grundsätzlich gilt dies für die Reste R¹ und R² auch selbst.

In der erfindungsgemäßen Kautschukmischung, vorzugsweise wie als bevorzugt beschrieben, ist der Rest R² unabhängig voneinander ausgewählt aus der Gruppe bestehend aus aliphatischen C₁- bis C₁₂-Resten, aromatischen Resten, Halogen-Resten, Cyano-Resten, Ester-Resten, Keton-Resten, Ether-Resten und Thioether-Resten.

Bevorzugt ist eine erfindungsgemäße Kautschukmischung, vorzugsweise wie als bevorzugt beschrieben, wobei die aliphatischen C₁- bis C₁₂-Reste, vorzugsweise entsprechende Alkylreste, in R² unabhängig voneinander lineare Teilreste, verzweigte Teilreste und/oder cyclische Teilreste umfassen; vorzugsweise linear, verzweigt oder cyclisch sind.

Bevorzugt ist eine erfindungsgemäße Kautschukmischung, vorzugsweise wie als bevorzugt beschrieben, wobei die aliphatischen C₁- bis C₁₂-Reste in R² unabhängig voneinander gesättigt oder ungesättigt sind, vorzugsweise gesättigt. Besonders bevorzugt sind sie somit Alkylreste.

Bevorzugt ist eine erfindungsgemäße Kautschukmischung, vorzugsweise wie als bevorzugt beschrieben, wobei die aliphatischen Reste in R² aliphatische C₁- bis C₁₀-Reste sind, vorzugsweise aliphatische C₁- bis C₈-Reste, weiter bevorzugt aliphatische C₁- bis C₆-Reste, besonders bevorzugt aliphatische C₁- bis C₄-Reste, ganz besonders bevorzugt Methyl- und/oder Ethyl-Reste. Somit handelt es sich bei den genannten aliphatischen Resten vorzugsweise um entsprechende Alkylreste.

In einigen Fällen ist eine erfindungsgemäße Kautschukmischung bevorzugt, vorzugsweise wie als bevorzugt beschrieben, wobei die aliphatischen C₁- bis C₁₂-Reste in R² unabhängig voneinander einen oder mehr als einen Halogen-Substituenten umfassen, vorzugsweise ausgewählt aus der Gruppe bestehend aus Fluor, Chlor und Brom.

Bevorzugt ist eine erfindungsgemäße Kautschukmischung, vorzugsweise wie als bevorzugt beschrieben, wobei die aromatischen Reste in R² unabhängig voneinander 5 bis 20 Kohlenstoffatome umfassen, vorzugsweise 6 bis 15 Kohlenstoffatome, weiter bevorzugt 6 bis 12 Kohlenstoffatome, besonders bevorzugt 6 bis 10 Kohlenstoffatome, am bevorzugtesten 6 bis 8 Kohlenstoffatome.

Bevorzugt ist eine erfindungsgemäße Kautschukmischung, vorzugsweise wie als bevorzugt beschrieben, wobei die aromatischen Reste in R² unabhängig voneinander einen oder mehr als einen Halogen-Substituenten umfassen, vorzugsweise ausgewählt aus der Gruppe bestehend aus Fluor, Chlor und Brom.

Bevorzugt ist eine erfindungsgemäße Kautschukmischung, vorzugsweise wie als bevorzugt beschrieben, wobei die Halogen-Reste in R² unabhängig voneinander ausgewählt sind aus der Gruppe bestehend aus Fluor, Chlor und Brom.

Bevorzugt ist eine erfindungsgemäße Kautschukmischung, vorzugsweise wie als bevorzugt beschrieben, wobei die Ester-Reste, Keton-Reste, Ether-Reste und Thioether-Reste in R² unabhängig voneinander 1 bis 20 Kohlenstoffatome umfassen, vorzugsweise 1 bis 16 Kohlenstoffatome, weiter bevorzugt 1 bis 12 Kohlenstoffatome, besonders bevorzugt 1 bis 9 Kohlenstoffatome, weiter besonders bevorzugt 1 bis 7 Kohlenstoffatome, am bevorzugtesten 1 bis 5 Kohlenstoffatome. In einigen Fällen ist es bevorzugt, dass die vorstehenden Obergrenzen an Kohlenstoffatomen mit mindestens 2 Kohlenstoffatome als Untergrenze kombiniert sind.

Der oder die Reste R² sind besonders bevorzugt durch Auswahl geeigneter Ausgangsverbindungen bereits angebunden.

Bevorzugt ist eine erfindungsgemäße Kautschukmischung, vorzugsweise wie als bevorzugt beschrieben, wobei n und m unterschiedlich oder identisch sind, mit der Maßgabe, dass m nicht den Wert 0 (Null) annehmen kann. Die Anzahl und Art der Substituenten R¹ bzw. R² hat bei entsprechender Auswahl einen entscheidenden Einfluss auf die Löslichkeit der Verbindung innerhalb der erfindungsgemäßen Kautschukmischung.

In anderen Fällen ist eine erfindungsgemäße Kautschukmischung bevorzugt, vorzugsweise wie als bevorzugt beschrieben, wobei in der Verbindung gemäß Formel (I) n gleich 0 (Null) ist.

In einigen Fällen ist eine erfindungsgemäße Kautschukmischung bevorzugt, vorzugsweise wie als bevorzugt beschrieben, wobei in der Verbindung gemäß Formel (I) n gleich Null ist und m gleich 1 oder größer ist. Eine solche Verbindung weist in vielen Fällen eine sehr gute Löslichkeit in der erfindungsgemäßen Kautschukmischung auf und sorgt somit für einen adäquaten Alterungsschutz. Insbesondere wird damit das unerwünschte Ausblühen weiter gesenkt oder ganz verhindert.

Wie bereits oben erwähnt, ist in der Verbindung gemäß Formel (I) der Rest R¹ ausgewählt aus der Gruppe bestehend aus
- xi) C₁- bis C₄-Alkyl-Resten und C₁- bis C₄-Alkoxy-Resten.

Bevorzugt ist eine erfindungsgemäße Kautschukmischung, vorzugsweise wie als bevorzugt beschrieben, wobei die Reste gemäß xi) lineare Teilreste, verzweigte Teilreste und/oder cyclische Teilreste umfassen; vorzugsweise linear, verzweigt oder cyclisch sind.

Ganz besonders bevorzugt ist eine erfindungsgemäße Kautschukmischung, vorzugsweise wie als bevorzugt beschrieben, wobei in Formel (I) R¹ ausgewählt ist aus der Gruppe bestehend aus
C₁- bis C₃-Alkylresten, vorzugsweise C₁- bis C₂-Alkylresten, besonders bevorzugt Methyl-Resten;
   und/oder
m eine ganze Zahl in einem Bereich von 1 bis 10 ist, vorzugsweise von 2 bis 8, besonders bevorzugt von 2 bis 6, ganz besonders bevorzugt von 3 bis 6, am bevorzugtesten von 3 bis 4.

Insbesondere bevorzugt ist eine erfindungsgemäße Kautschukmischung, vorzugsweise wie als bevorzugt beschrieben, wobei in Formel (I) m 2 oder größer ist, R¹ identisch ist und einen Methyl-Rest bedeutet, wobei mindestens zwei Methylreste an dasselbe Kohlenstoffatom gebunden sind.

Am bevorzugtesten ist eine erfindungsgemäße Kautschukmischung, vorzugsweise wie als bevorzugt beschrieben, wobei die Verbindung der Formel (I) gemäß (c) eine Struktur der Formel (II) aufweist

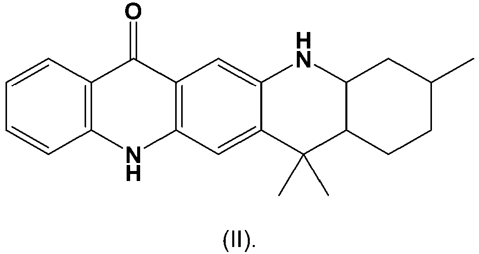

Ganz besonders bevorzugt ist eine erfindungsgemäße Kautschukmischung, vorzugsweise wie als bevorzugt beschrieben, wobei die eine oder mehr als eine Verbindung gemäß Formel (I), bevorzugte Formen dessen bzw. die Verbindung gemäß Formel (II), die einzigen Alterungsschutzmittel sind. Daher ist bevorzugt, dass Verbindungen der Formel (I), bevorzugte Formen dessen bzw. die Verbindung gemäß Formel (II), die einzigen Acridon-Verbindungen in der erfindungsgemäßen Kautschukmischung sind.

Besonders bevorzugt ist eine erfindungsgemäße Kautschukmischung, vorzugsweise wie als bevorzugt beschrieben, nicht umfassend eine Verbindung aus der Gruppe bestehend aus N-Phenyl-N'-(1,3-dimethylbutyl)-p-phenylendiamin (6PPD), N,N'-Diphenyl-p-phenylendiamin (DPPD), N-(1-phenylethyl)-N'-phenyl-p-phenylendiamin (SPPD), N,N'-Ditolyl-p-phenylendiamin (DTPD), N-(1,4-dimethylpentyl)-N'-phenyl-p-phenylendiamin (7PPD), und N-Isopropyl-N'-phenyl-p-phenylendiamin (IPPD); vorzugsweise nicht umfassend irgend ein Phenylendiamin. Solche Verbindungen sind typische konventionelle Alterungsschutzmittel, die im Kontext der vorliegenden Erfindung durch eine oder mehr als eine Verbindung der Formel (I) gemäß (c) ersetzt werden sollen.

Die erfindungsgemäße Kautschukmischung umfasst zudem gemäß (d) eine oder mehr als eine Kieselsäure als Füllstoff in einer Gesamtmenge in einem Bereich von 50 bis 250 phr. Im Kontext der vorliegenden Erfindung haben die Begriffe Kieselsäure und Silica den gleichen Bedeutungsumfang und sind daher synonym.

Bevorzugt ist eine grundsätzliche, erfindungsgemäße Kautschukmischung, vorzugsweise wie als bevorzugt beschrieben, wobei die eine oder mehr als eine Kieselsäure gemäß (d) in einer Gesamtmenge im Bereich von 50 bis 210 phr, vorzugsweise von 55 bis 170 phr besonders bevorzugt von 55 bis 130 phr vorliegt. Zu spezifischen Gesamtmengen in Abhängigkeit von konkreten Kautschukkombinationen siehe oben im Text.

Unabhängig von der bevorzugten Ausführungsform bezüglich der Kautschuke sind die erfindungsgemäßen Kautschukmischungen im Wesentlichen frei von Ruß. Besonders bevorzugt ist eine erfindungsgemäße Kautschukmischung, vorzugsweise wie im vorliegenden Text beschrieben, zusätzlich umfassend als weiteren Füllstoff 0 (Null) bis 5 phr Ruß, vorzugsweise 0 (Null) bis 3 phr, besonders bevorzugt 0 (Null) bis 1,5 phr, ganz besonders bevorzugt 0 (Null) phr. In vielen Fällen ist die Freiheit von Ruß bevorzugt (d.h. 0 (Null) phr), wobei kleine Mengen, die z.B. als (unvermeidbare) Verunreinigung eingetragen werden oder lediglich zur Schwarzfärbung dienen, grundsätzlich akzeptabel sind, da deren Gesamtmengen zu gering sind, um die grundsätzlichen Leistungseigenschaften der erfindungsgemäßen Kautschukmischung signifikant zu verändern, d.h. die Gesamtmenge zwar größer 0 (Null) ist aber vorzugsweise in Kombination mit den vorstehend genannten Bereichen deren Obergrenzen nicht überschreitet. Unter Berücksichtigung dessen ist es besonders bevorzugt, dass die Gesamtmenge an Ruß in einem Bereich von 0,5 bis 5 phr liegt, vorzugsweise von 1 bis 3 phr.

Dies bedeutet zudem, dass die Gesamtmenge an Kieselsäure den überwiegenden Anteil des Gesamtfüllstoffgehaltes darstellt, vorzugsweise 90 Gew.-% oder mehr, bezogen auf die Gesamtmasse aller Füllstoffe, vorzugsweise 95 Gew.-% oder mehr. In einigen Fällen ist es bevorzugt, dass die Gesamtmenge an Kieselsäure der Gesamtfüllstoffmenge entspricht. Mit anderen Worten, Kieselsäure ist in diesen Fällen vorzugsweise der einzige Füllstoff.

Vorzugsweise ist die eine oder mehr als eine Kieselsäure ausgewählt aus der Gruppe bestehend aus amorphen Siliziumdioxiden und pyrogenen Siliziumdioxiden. Ein besonders bevorzugtes amorphes Siliziumdioxid umfasst gefällte Kieselsäure, die typischerweise auch als gefälltes Siliziumdioxid bezeichnet wird.

Vorzugsweise weist die eine oder mehr als eine Kieselsäure eine Stickstoff-Oberfläche (BET-Oberfläche) (gemäß DIN ISO 9277 und DIN 66132) im Bereich von 35 bis 400 m²/g, bevorzugt von 50 bis 350 m²/g, besonders bevorzugt von 85 bis 320 m²/g, ganz besonders bevorzugt von 120 bis 235 m²/g, und/oder (vorzugsweise und) mit einer CTAB-Oberfläche (gemäß ASTM D 3765) im Bereich von 30 bis 400 m²/g, bevorzugt von 50 bis 330 m²/g, besonders bevorzugt von 80 bis 300 m²/g, ganz besonders bevorzugt von 115 bis 200 m²/g. In manchen Fällen besonders bevorzugte Kieselsäure sind solche des Typs Ultrasil^{®} VN3 (Handelsname) der Firma Evonik. Weiter bevorzugt sind zudem hoch-dispergierbare Kieselsäuren (sogenannte HD-Kieselsäuren). Bevorzugte hoch-dispergierbare Kieselsäuren umfassen Zeosil^{®} 1165 MP der Firma Solvay und Ultrasil^{®} 7000 der Firma Evonik. Andere Kieselsäuren mit vergleichsweise niedrigeren BET-Oberflächen sind alternativ bevorzugt, beispielsweise Zeosil^{®} 1115 oder Zeosil^{®} 1085 der Firma Solvay. Im Kontext der vorliegenden Erfindung sind ebenfalls Kieselsäuren umfasst, die aus dem Rückstand der Verbrennung von Reisschalen gewonnen werden.

Sofern Kleinstmengen an Ruß zum Einsatz kommen, kommen grundsätzlich alle dem Fachmann bekannten Rußtypen in Frage. Bevorzugt ist ein Ruß ausgewählt aus der Gruppe bestehend aus Industrierußen und Pyrolyse-Rußen.

In einigen Fällen ist eine erfindungsgemäße Kautschukmischung bevorzugt, vorzugsweise wie als bevorzugt beschrieben, wobei der Ruß als Begleitmaterial eines anderen Mischungsbestandteils (vorzugsweise einer Silanverbindung) in vergleichsweise geringen Mengen eingetragen wird, vorzugsweise in einer Gesamtmenge von 5 phr oder geringer.

Im Kontext der vorliegenden Erfindung gehört Zinkoxid nicht zu den Füllstoffen im Sinne der vorliegenden Erfindung, sondern zu bevorzugten weiteren Zusatzstoffen (siehe Text weiter unten zu weiteren Zusatzstoffen).

Die erfindungsgemäße Kautschukmischung umfasst zudem vorzugsweise
(e) einen oder mehr als einen Weichmacher.

Bevorzugt ist eine erfindungsgemäße Kautschukmischung, vorzugsweise wie als bevorzugt beschrieben, wobei der eine oder mehr als eine Weichmacher gemäß (e) ausgewählt ist aus der Gruppe bestehend aus Ölen, Harzen, Faktis, und Flüssigpolymeren. Bevorzugte Öle umfassen synthetische Öle, Mineralöle und/oder Pflanzenöle, wobei Pflanzenöle und/oder Mineralöle besonders bevorzugt sind. Die Pflanzenöle umfassen vorzugsweise Rapsöl, Sojaöl und/oder Leinsamöl, besonders bevorzugt Rapsöl. Pflanzenöle umfassen typischerweise Triglyceride. Bevorzugte synthetische Öle umfassen biomass-to-liquid (BTL) Öle. Bevorzugte Mineralöle umfassen aromatische, naphthenische und/oder paraffinische Mineralöle. Insbesondere bevorzugte Mineralöle umfassen MES (mild extraction solvate), DAE (Destillated Aromatic Extracts), RAE (Residual Aromatic Extract), TDAE (treated distillate aromatic extract), und Rubber-to-Liquid-Öle (RTL). Die Flüssigpolymere umfassen vorzugsweise ein oder mehr als ein flüssiges Polybutadien, vorzugsweise jeweils mit einem mittleren Molekulargewicht in einem Bereich von 500 bis 20.000 g/mol (bestimmt per GPC in Anlehnung an BS ISO 11344:2002). Im Kontext der vorliegenden Erfindung gehen Flüssigpolymere nicht als Kautschuk in die Berechnung der Zusammensetzung der Polymermatrix ein. In einigen Fällen ist besonders bevorzugt eine Kombination aus einem oder mehr als einem Mineralöl und einem oder mehr als einem Pflanzenöl oder eine Kombination aus einem oder mehr als einem Öl und einem oder mehr als einem Harz.

Bevorzugt ist eine erfindungsgemäße Kautschukmischung, vorzugsweise wie vorstehend und/oder nachstehend als bevorzugt beschrieben, wobei der eine oder mehr als eine Weichmacher gemäß (e), in der erfindungsgemäßen Kautschukmischung in einer Gesamtmenge im Bereich von 0 bis 180 phr vorliegt (d.h. auch optional sein kann, wobei vorzugsweise 0 (Null) phr als Untergrenze mit den nachfolgenden Obergrenzen kombiniert werden kann), bevorzugt von 1 bis 150 phr, besonders bevorzugt von 5 bis 130 phr, ganz besonders bevorzugt von 10 bis **110** phr, am bevorzugtesten von 15 bis 105 phr, weiter am bevorzugtesten von 20 bis 100 phr, ganz besonders am bevorzugtesten von 30 bis 90 phr. Vorzugsweise gelten diese unter Maßgabe der nachfolgend genannten, spezifischen Gesamtmengen für Öle und/oder Harze.

Bevorzugt liegen Öle in einer Gesamtmenge in einem Bereich von 2,5 bis 75 phr vor, vorzugsweise von 5 bis 65 phr, besonders bevorzugt von 10 bis 60 phr, ganz besonders bevorzugt von 15 bis 55 phr. Diese Bereiche gelten einerseits vorzugsweise, wenn Öle die einzigen Weichmacher in der erfindungsgemäßen Kautschukmischung sind oder andererseits vorzugsweise unter der Maßgabe, die oben genannten und definierten Gesamtmengen an Weichmachern einzuhalten.

Bevorzugte Harze umfassen Kohlenwasserstoffharze oder natürliche Harze. Besonders bevorzugt umfassen die Harze eines oder mehrere aus der Gruppe bestehend aus AMS Harzen, Terpenharzen, Phenolharzen, Cumaron-Inden-Harzen, aliphatischen Kohlenwasserstoffharzen, aromatischen Kohlenwasserstoffharzen und natürlichen Harzen. Sofern Harze als Bestandteil der Weichmacher eingesetzt werden, liegt deren Gesamtmenge in einem Bereich von 2,5 bis 60 phr, vorzugsweise von 5 bis 45 phr, besonders bevorzugt von 10 bis 40 phr, ganz besonders bevorzugt von 15 bis 35 phr. Diese Bereiche gelten einerseits vorzugsweise, wenn Harze die einzigen Weichmacher in der erfindungsgemäßen Kautschukmischung sind oder andererseits vorzugsweise unter der Maßgabe, die oben genannten und definierten Gesamtmengen an Weichmachern einzuhalten.

Bevorzugt ist eine erfindungsgemäße Kautschukmischung, vorzugsweise wie als bevorzugt beschrieben, umfassend einen oder mehr als einen weiteren Zusatzstoff. Hierbei handelt es sich vorzugsweise um übliche Zusatzstoffe in den typischen Mengen, die bei der Herstellung einer entsprechenden Kautschukmischung vorzugsweise in wenigstens einer Grundmischstufe zugegeben werden.

Vorzugsweise umfasst der eine oder mehr als eine weitere Zusatzstoff:
i) sekundäre Alterungsschutzmittel, die keine Verbindung der Formel (I) sind (bzw. kein Bestandteil der Komponente gemäß (c)), vorzugsweise umfassend ein oder mehr als ein Dihydrochinolin; besonders bevorzugt 2,2,4-Trimethyl-1,2-dihydrochinolin (TMQ); dies ist in vielen Fällen bevorzugt; in anderen wenigen Fällen umfasst die erfindungsgemäße Kautschukmischung, vorzugsweise wie als bevorzugt beschrieben, kein TMQ, vorzugsweise keine Dihydrochinoline, besonders bevorzugt überhaupt keine von (c) verschiedenen Alterungsschutzmittel;
ii) einen Aktivator; vorzugsweise umfassend Zinkverbindungen (inklusive Zinkkomplexe) und/oder Fettsäuren; besonders bevorzugt umfassend Zinkoxid, Stearinsäure und/oder Zinkethylhexanoat;
iii) Agenzien für die Anbindung an die Kieselsäuren; vorzugsweise umfassend Silan-Kupplungsagenzien;
iv) Ozonschutzwachse;
v) Harze, vorzugsweise Klebharze, wobei die Harze keine Weichmacherharze sind;
vi) Mastikationshilfsmittel; vorzugsweise umfassend 2,2'-Dibenzamidodiphenyldisulfid (DBD); und/oder
vii) Prozesshilfsmittel; vorzugsweise umfassend Fettsäureester und/oder Metallseifen, wobei bevorzugte Metallseifen Zinkseifen und/oder Calciumseifen umfassen.

Bevorzugt ist eine erfindungsgemäße Kautschukmischung, vorzugsweise wie als bevorzugt beschrieben, wobei der eine oder mehr als eine weitere Zusatzstoff in einer Gesamtmenge im Bereich von 1 bis 150 phr umfasst ist, bevorzugt von 2 bis 100 phr, weiter bevorzugt von 5 bis 80 phr, am bevorzugtesten von 7 bis 60 phr.

Bei den Silan-Kupplungsagenzien (siehe iii) oben) handelt es sich vorzugsweise um alle dem Fachmann bekannte Typen. Vorzugsweise umfasst die erfindungsgemäße Kautschukmischung, vorzugsweise wie als bevorzugt beschrieben, ein oder mehr als ein Silan-Kupplungsagenz. In manchen Fällen umfasst die erfindungsgemäße Kautschukmischung vorzugsweise ein Gemisch verschiedener Silan-Kupplungsagenzien. Der Einsatz von Silan-Kupplungsagenzien ist daher insbesondere bevorzugt, das als Füllstoff eine oder mehr als eine Kieselsäure eingesetzt wird.

Silan-Kupplungsagenzien reagieren mit den oberflächlichen Silanolgruppen der Kieselsäure oder anderen polaren Gruppen entweder während des Mischens des Kautschuks bzw. der Kautschukmischung (*in-situ*) oder bereits vor der Zugabe dessen zum Kautschuk während einer Vorbehandlung (Vormodifizierung).

Bevorzugte Silan-Kupplungsagenzien umfassen bifunktionale Organosilane, die am Siliciumatom mindestens eine Alkoxy-, Cycloalkoxy- oder Phenoxygruppe als Abgangsgruppe besitzen und als zusätzliche Funktionalität eine Gruppe aufweisen, die (gegebenenfalls nach Spaltung) eine chemische Reaktion mit den Doppelbindungen des Polymers eingehen kann. Bevorzugte Gruppen umfassen -SCN, -SH, -NH₂ und/oder -Sₓ-(mit x = 2 bis 8). Silan-Kupplungsagenzien mit einer -SH Gruppe werden typischerweise auch als Mercaptosilane bezeichnet. Bevorzugte Mercaptosilane umfassen geblockte Mercaptosilane, vorzugsweise gemäß WO 99/09036 A1 und/oder DE 10 2017 221 232 A1. Der Einsatz solcher Mercaptosilane als Kupplungsagenzien sind im Kontext der vorliegenden Erfindung besonders bevorzugt und daher vorzugsweise in der erfindungsgemäßen Kautschukmischung enthalten. Diese liegen entweder in freier Form vor oder bereits mit Anbindung an den Kieselsäure-Füllstoff (Vormodifizierung), vorzugsweise in freier Form. Weiter bevorzugt ist eine erfindungsgemäße Kautschukmischung, vorzugsweise wie als bevorzugt beschrieben, umfassend ein geblocktes Mercaptosilan, vorzugsweise ein geblocktes Mercaptosilan umfassend einen Alkanoylrest, besonders bevorzugt ein geblocktes Mercaptosilan umfassend einen Octanoylrest. Bevorzugte Alkanoylreste umfassen 2 bis 12 Kohlenstoffatome, vorzugsweise 4 bis 10, besonders bevorzugt 6 bis 9.

Besonders bevorzugte Silan-Kupplungsagenzien umfassen 3-Mercaptopropyltriethoxysilan, 3-Thiocyanato-propyltrimethoxysilan, 3,3'-Bis(triethoxysilylpropyl)polysulfide mit 2 bis 8 Schwefelatomen (besonders bevorzugt 3,3'-Bis(triethoxysilylpropyl)tetrasulfid (TESPT) und/oder dessen Disulfid (TESPD)) und/oder Gemische der Sulfide mit vorzugsweise jeweils unterschiedlicher Anzahl an Schwefelatomen. In einigen Fällen ist TESPT bevorzugt.

Bevorzugte Silan-Kupplungsagenzien umfassen, zusätzlich oder alternativ, auch solche gemäß DE 10 2005 044 456 A1, WO 2008/083241 A1, WO 2008/083242 A1, WO 2008/083243 A1 und/oder WO 2008/083244 A1.

Weitere bevorzugte Silan-Kupplungsagenzien, zusätzlich oder alternativ, umfassen unter dem Namen NXT in verschiedenen Varianten von der Firma Momentive, USA, vertriebene Silane (vorzugsweise 3-Octanoylthio-1-propyltriethoxysilan) und/oder unter dem Namen VP Si 363^{®} von der Firma Evonik Industries vertriebene Silane.

Bevorzugt ist eine erfindungsgemäße Kautschukmischung, vorzugsweise wie als bevorzugt beschrieben, wobei das eine oder mehr als eine Silan-Kupplungsagenz in einer Gesamtmenge im Bereich von 1 bis 50 phf (Gewichtsteile, bezogen auf 100 Gewichtsteile Kieselsäure) umfasst ist, bevorzugt von 2 bis 40 phf, weiter bevorzugt von 3 bis 30 phf, noch weiter bevorzugt von 4 bis 20 phf, am bevorzugtesten von 5 bis 18 phf. Die hier verwendete Angabe phf (parts per hundred parts of filler by weight) ist dabei die in der Kautschukindustrie gebräuchliche Mengenangabe für Kupplungsagenzien für Füllstoffe. Im Kontext der vorliegenden Erfindung bezieht sich phf auf die Gesamtmenge an Kieselsäure als Füllstoff, das heißt, dass andere eventuell vorhandene Füllstoffe wie Ruß nicht in der Berechnung berücksichtigt werden.

Bevorzugt ist eine erfindungsgemäße Kautschukmischung, vorzugsweise wie als bevorzugt beschrieben, umfassend einen oder mehr als einen Aktivator (siehe ii) oben); vorzugsweise eine Zinkverbindung, besonders bevorzugt Zinkoxid. Hinsichtlich der Typen an Zinkoxid gibt es vorzugsweise keine Einschränkung. Bevorzugt ist ein Granulat und/oder ein Pulver. Bevorzugt besitzt das Zinkoxid eine BET-Oberfläche bis zu 100 m²/g, vorzugsweise in einem Bereich von 1 bis 100 m²/g. In einigen Fällen ist ein Zinkoxid bevorzugt, wobei die BET-Oberfläche kleiner 10 m²/g ist. In anderen Fällen ist ein Zinkoxid bevorzugt, wobei die BET-Oberfläche im Bereich von 10 bis 100 m²/g liegt, besonders bevorzugt sind sogenannte "nano-Zinkoxide". Vorzugsweise liegt der eine oder mehr als eine Aktivator, insbesondere bevorzugt die Zinkverbindung, in einer Gesamtmenge vor in einem Bereich von 1 bis 15 phr, vorzugsweise von 1,5 bis 10 phr, am bevorzugtesten von 2 bis 5 phr.

Die erfindungsgemäße Kautschukmischung ist schwefelvernetzbar, d.h. vulkanisierbar, wobei im Kontext der vorliegenden Erfindung beide Begriffe bedeutungsgleich und somit synonym sind. Die dadurch ausgelöste Vernetzungsreaktion führt zu einem Vulkanisat, welches vollständig oder zumindest teilweise vulkanisiert ist, vorzugsweise vollständig vulkanisiert. Dem Fachmann ist jedoch selbstverständlich klar, dass bis zur maßgeblichen Verarbeitung bzw. Verwendung die Kautschukmischung typischerweise nicht vulkanisiert vorliegt.

Die Vulkanisation bzw. das Vulkanisieren der erfindungsgemäßen Kautschukmischung erfolgt bevorzugt in Anwesenheit von Schwefel und/oder Schwefelspendern, vorzugsweise unter Mitwirkung von Vulkanisationsbeschleunigern, wobei vorzugsweise einige Vulkanisationsbeschleuniger zugleich Schwefelspender sind.

Bevorzugt ist eine erfindungsgemäße Kautschukmischung, vorzugsweise wie als bevorzugt beschrieben, zusätzlich umfassend
(f) Schwefel und/oder einen oder mehr als einen Schwefelspender.

Hinsichtlich der Schwefelspender gibt es keine besondere Einschränkung, so dass grundsätzlich alle für den Fachmann bekannten Schwefelspender in Betracht kommen, solange sie unter den vorliegenden Bedingungen Schwefel in entsprechender Form zur Verfügung stellen. Der eine oder mehr als eine Schwefelspender ist vorzugsweise ausgewählt aus der Gruppe bestehend aus Thiuramdisulfiden, Thiuramtetrasulfiden, Dithiophosphaten, Thiocarbamoyldithioalkanen, und Polysulfiden. Bevorzugte Thiuramdisulfide umfassen Tetrabenzylthiuramdisulfid (TBzTD), Tetramethylthiuramdisulfid (TMTD) und/oder Tetraethylthiuramdisulfid (TETD). Bevorzugte Thiuramtetrasulfide umfassen Dipentamethylenthiuramtetrasulfid (DPTT). Bevorzugte Dithiophosphate umfassen Bis(diisopropyl)thiophosphoryldisulfid (DIPDIS), Zinkdichloryldithiophosphat, und/oder Zinkalkyldithiophosphat. Bevorzugte Polysulfide umfassen Bis(O,O-2-ethylhexyl-thiophosphoryl)polysulfid, Diarylpolysulfide und/oder Dialkylpolysulfide. Bevorzugte Thiocarbamoyldithioalkane umfassen 1,6-Bis(N,N-dibenzylthiocarbamoyldithio)hexan (BDzTH).

Bevorzugt ist eine erfindungsgemäße Kautschukmischung, vorzugsweise wie als bevorzugt beschrieben, wobei der Schwefel und der eine oder mehr als eine Schwefelspender in einer Gesamtmenge in einem Bereich von 0,1 bis 5 phr vorliegt, vorzugsweise von 0,5 bis 4 phr, weiter bevorzugt von 1 bis 3,5 phr, am bevorzugtesten von 1,5 bis 3 phr.

Bevorzugt ist eine erfindungsgemäße Kautschukmischung, vorzugsweise wie als bevorzugt beschrieben, umfassend (alternativ oder zusätzlich zu einem Schwefelspender) einen oder mehr als einen Vulkanisationsbeschleuniger.

Bevorzugte Vulkanisationsbeschleuniger umfassen Thiazolbeschleuniger, Mercaptobeschleuniger, Sulfenamidbeschleuniger, Thiocarbamatbeschleuniger, Thiurambeschleuniger, Thiophosphatbeschleuniger, Thioharnstoffbeschleuniger, Xanthogenat-Beschleuniger, Guanidin-Beschleuniger, und/oder Kombinationen daraus. Besonders bevorzugt sind Sulfenamidbeschleuniger, insbesondere Thiazolsulfenamidbeschleuniger, und Guanidin-Beschleuniger. Besonders bevorzugt ist ein oder mehr als ein Beschleuniger ausgewählt aus der Gruppe bestehend aus N-Cyclohexyl-2-benzothiazolsulfenamid (CBS), N,N-Dicyclohexylbenzothiazol-2-sulfenamid (DCBS), N-tert-butyl-2-benzothiazole sulfenimide (TBSI), Benzothiazyl-2-sulfenmorpholid (MBS), N-tert-Butyl-2-benzothiazylsulfenamid (TBBS) und Diphenylguanidin (DPG).

Bevorzugt ist eine erfindungsgemäße Kautschukmischung, vorzugsweise wie als bevorzugt beschrieben, umfassend einen oder mehr als einen Vulkanisationsverzögerer. Die Anwesenheit eines Vulkanisationsverzögerers trägt beispielsweise zu einem besser ausbalancierten Vulkanisationsverlauf bei.

Die erfindungsgemäße Kautschukmischung wird vorzugsweise hergestellt oder bereitgestellt, besonders bevorzugt hergestellt. Dies erfolgt vorzugsweise nach in der Kautschukindustrie üblichen Verfahren, bei denen zunächst in einer oder mehr als einer Mischstufe eine Grundmischung mit allen Bestandteilen außer (d.h. abzüglich) dem Vulkanisationssystem bereitgestellt wird, wobei das Vulkanisationssystem den Schwefel und die vulkanisationsbeeinflussenden Verbindungen umfasst, d.h. vorzugsweise die Gesamtmenge aus Schwefel, Schwefelspender, Vulkanisationsbeschleuniger und Vulkanisationsverzögerer. Durch Zugabe des Vulkanisationssystems in einer letzten Mischstufe wird eine Fertigmischung erzeugt, welche vorzugsweise durch Extrusion und/oder Kalandrieren weiterverarbeitet und in die gewünschte Form gebracht wird. Die dabei erzielte Form entscheidet vorzugsweise über die anschließende Verwendung, wie z.B. als Laufstreifen oder eine Seitenwand für einen Fahrzeugreifen bzw. Fahrzeugluftreifen.

Die vorliegende Erfindung betrifft zudem ein Vulkanisat umfassend oder bestehend aus der erfindungsgemäßen schwefelvernetzbaren Kautschukmischung, vorzugsweise wie als bevorzugt definiert, wobei das Vulkanisat durch Schwefelvulkanisation resultiert.

Das vorstehend Gesagte zu der erfindungsgemäßen Kautschukmischung, jeweils inklusive bevorzugter Ausgestaltungen, gilt vorzugsweise *mutatis mutandis* auch für das erfindungsgemäße Vulkanisat.

Weiter betrifft die vorliegende Erfindung ein Reifenbauteil umfassend oder bestehend aus dem erfindungsgemäßen Vulkanisat, vorzugsweise wie als bevorzugt definiert.

Das vorstehend Gesagte zu der erfindungsgemäßen Kautschukmischung bzw. zum erfindungsgemäßen Vulkanisat, jeweils inklusive bevorzugter Ausgestaltungen, gilt vorzugsweise *mutatis mutandis* auch für das erfindungsgemäße Reifenbauteil.

In manchen Fällen besteht das erfindungsgemäße Reifenbauteil vollständig aus einem oder mehr als einem erfindungsgemäßen Vulkanisat. In anderen Fällen umfasst das erfindungsgemäße Reifenbauteil lediglich teilweise ein oder mehr als ein erfindungsgemäßes Vulkanisat. Vorzugsweise umfasst das erfindungsgemäße Reifenbauteil überwiegend ein oder mehr als ein erfindungsgemäßes Vulkanisat. Zusätzlich sind ggf. auch Vulkanisate enthalten, die nicht erfindungsgemäß sind.

Besonders bevorzugt ist ein erfindungsgemäßes Reifenbauteil, wobei das Reifenbauteil ein Laufstreifen, vorzugsweise eine Cap, eine Seitenwand, ein Hornprofil oder ein Apex ist, besonders bevorzugt ein Laufstreifen, vorzugsweise eine Cap, oder eine Seitenwand.

Die vorliegende Erfindung betrifft zudem einen Fahrzeugreifen, vorzugsweise einen Fahrzeugluftreifen, der ein, zwei oder mehr als zwei erfindungsgemäße Reifenbauteile, vorzugsweise wie vorstehend als bevorzugt definiert, aufweist.

Das vorstehend Gesagte zu der erfindungsgemäßen Kautschukmischung bzw. dem erfindungsgemäßen Vulkanisat bzw. Reifenbauteil, jeweils inklusive bevorzugter Ausgestaltungen, gilt vorzugsweise *mutatis mutandis* auch für den erfindungsgemäßen Fahrzeugreifen.

Vorzugsweise ist der erfindungsgemäße Fahrzeugreifen insgesamt vulkanisiert, d.h. kein Fahrzeugreifenrohling.

Vorzugsweise ist der erfindungsgemäße Fahrzeugreifen, vorzugsweise wie als bevorzugt beschrieben, ausgewählt aus der Gruppe bestehend aus Industrie- und Baustellenfahrzeugreifen, LKW-, PKW-, Van- und Zweiradreifen.

Nachfolgend wird die Erfindung durch Ausführungsbeispiele näher erläutert.

Die Verbindung gemäß Formel (II), als beispielhafte Ausgestaltung einer Verbindung gemäß Formel (I), wurde gemäß WO 2023/143677 A1, "Synthese von 3,14,14-trimethyl-2,3,4,4a,5,12,14,14a-octahydroquinolino[2,3-b]acridin-7(1H)-one" bereitgestellt.

Die erfindungsgemäße Kautschukmischung wurde mit dieser Verbindung auf eine für den Fachmann bekannte Weise bereitgestellt. Die sich ergebenden erfindungsgemäßen Beispiele sind mit "E" gekennzeichnet; Vergleichsversuche mit "V". Für die experimentelle Auswertung wurden Prüfkörper in Form einer Scheibe (Durchmesser 6 cm, 6 mm Dicke; zur Präparation von unter anderem Zugversuchen) erstellt, welche nach Formgebung bei einer Temperatur von 160°C vulkanisiert wurden.

Die Prüfkörper wurden nach der Vulkanisation in zwei Gruppen geteilt. Eine Gruppe Prüfkörper wurde zur Alterung für 56 Tage bei konstant 70°C in einem Wärmeschrank gealtert. Die andere Gruppe Prüfkörper wurde für weitere Labormessungen im ungealterten Zustand unmittelbar verwendet, während die gealterten Prüfkörper der ersten Gruppe erst nach deren Alterung vermessen wurden.

Als Vergleich dienen insbesondere Kautschukmischungen, die als Alterungsschutzmittel das typischerweise eingesetzte 6PPD enthalten. Die Mischungen sind nachfolgend in den Tabellen 1 und 2 zusammengefasst und eigenen sich insbesondere für die Herstellung von Laufstreifen, ganz besonders für eine Cap eines Laufstreifens. Eine Ausnahme bilden Mischungen mit den Nummern 7 und 8, die sowohl als Laufstreifen als auch für Seitenwände eingesetzt wurden.

**Tabelle 1, Kautschukmischungen, alle Angaben in phr sowie Ergebnisse**

| **Bestandteil** | **V1** | **E1** | **V2** | **E2** | **V3** | **E3** | **V4** | **E4** |
|---|---|---|---|---|---|---|---|---|
| NR^{a} | 0 | 0 | 0 | 0 | 0 | 0 | 0 | 0 |
| BR^{b1} | 20 | 20 | 20 | 20 | 20 | 20 | 20 | 20 |
| SSBR^{b2} | 80 | 80 | 80 | 80 | 80 | 80 | 80 | 80 |
| Ruß^{c} | 0 | 0 | 0 | 0 | 0 | 0 | 0 | 0 |
| Kieselsäure^{d} | 120 | 120 | 120 | 120 | 120 | 120 | 120 | 120 |
| Silan^{e1} | 8,6 | 8,6 | 0 | 0 | 8,6 | 8,6 | 0 | 0 |
| Silan^{e2} | 0 | 0 | 12,2 | 12,2 | 0 | 0 | 12,2 | 12,2 |
| Hilfsmittel^{f1} | 50 | 50 | 50 | 50 | 0 | 0 | 0 | 0 |
| Hilfsmittel^{f2} | 0 | 0 | 0 | 0 | 20 | 20 | 20 | 20 |
| Hilfsmittel^{f3} | 0 | 0 | 0 | 0 | 30 | 30 | 30 | 30 |
| 6PPD | 3 | 0 | 3 | 0 | 3 | 0 | 3 | 0 |
| Formel (II) | 0 | 3 | 0 | 3 | 0 | 3 | 0 | 3 |
| ZnO | 3 | 3 | 3 | 3 | 3 | 3 | 3 | 3 |
| Stearinsäure | 2 | 2 | 2 | 2 | 2 | 2 | 2 | 2 |
| Beschleuniger | 2 | 2 | 2 | 2 | 2 | 2 | 2 | 2 |
| Schwefel | 2 | 2 | 2 | 2 | 2 | 2 | 2 | 2 |
| DPG | 2 | 2 | 2 | 2 | 2 | 2 | 2 | 2 |

| Ergebnisse | | | | | | | | |
|---|---|---|---|---|---|---|---|---|
| Leistungsindex A | 100 | 99 | 100 | 100 | 100 | 99 | 100 | 98 |
| Leistungsindex B | 100 | 97 | 100 | 45 | 100 | 88 | 100 | 83 |

| | | | | | | | | |
|---|---|---|---|---|---|---|---|---|
| ^{a} NR TSR ^{b1} Europrene Neocis BR 40, Fa. Polimeri ^{b2} Sprintan SLR-4601, Trinseo ^{c} Ruß (Füllstoff): N339, Fa. Orion Engineered Carbons ^{d} Kieselsäure (Füllstoff): VN3, Fa. Evonik ^{e1} TESPD, Evonik Industries, Deutschland auf Ruß im Gewichtsverhältnis 1:1, X-50S, Evonik Industries, Deutschland; entspricht ca. 7,2 phf ^{e2} NXT, Momentive, enthält > 90 Gew.-% Silan; entspricht ca. 10,2 phf ^{f1} Weichmacher: TDAE-Mineralöl ^{f2} Weichmacher: Rapsöl ^{f3} Weichmacher: Harz, Alpha methyl styrene (AMS) resin | | | | | | | | |

**Tabelle 2, Kautschukmischungen, alle Angaben in phr sowie Ergebnisse**

| **Bestandteil** | **V5** | **E5** | **V6** | **E6** | **V7** | **E7** | **V8** | **E8** |
|---|---|---|---|---|---|---|---|---|
| NR^{a} | 20 | 20 | 20 | 20 | 60 | 60 | 60 | 60 |
| BR^{b1} | 0 | 0 | 0 | 0 | 0 | 0 | 0 | 0 |
| fl. BR^{b3} | 30 | 30 | 30 | 30 | 0 | 0 | 0 | 0 |
| SSBR^{b4} | 80 | 80 | 80 | 80 | 40 | 40 | 40 | 40 |
| Ruß^{c} | 0 | 0 | 0 | 0 | 0 | 0 | 0 | 0 |
| Kieselsäure^{d} | 120 | 120 | 120 | 120 | 60 | 60 | 60 | 60 |
| Silan^{e2} | 8,6 | 8,6 | 8,6 | 8,6 | 0 | 0 | 0 | 0 |
| Silan^{e3} | 0 | 0 | 0 | 0 | 9,6 | 9,6 | 0 | 0 |
| Silan^{e4} | 0 | 0 | 0 | 0 | 0 | 0 | 6,4 | 6,4 |
| Hilfsmittel^{f1} | 0 | 0 | 0 | 0 | 0 | 0 | 0 | 0 |
| Hilfsmittel^{f2} | 0 | 0 | 0 | 0 | 0 | 0 | 0 | 0 |
| Hilfsmittel^{f3} | 20 | 20 | 20 | 20 | 0 | 0 | 0 | 0 |
| 6PPD | 3 | 0 | 3 | 0 | 2 | 0 | 2 | 0 |
| Formel (II) | 0 | 3 | 0 | 3 | 0 | 2 | 0 | 2 |
| ZnO | 3 | 3 | 3 | 3 | 3 | 3 | 3 | 3 |
| Stearinsäure | 2 | 2 | 2 | 2 | 2 | 2 | 2 | 2 |
| Beschleuniger^{g} | 4 | 4 | 4 | 4 | 2 | 2 | 2 | 2 |
| Schwefel | 1,9 | 1,9 | 1,9 | 1,9 | 2 | 2 | 2 | 2 |
| DPG | 2 | 2 | 2 | 2 | 2 | 2 | 2 | 2 |
| TMQ | 0 | 0 | 1 | 1 | 0 | 0 | 0 | 0 |

| Ergebnisse | | | | | | | | |
|---|---|---|---|---|---|---|---|---|
| Leistungsindex A | 100 | 97 | 100 | 97 | 100 | 97 | 100 | 97 |
| Leistungsindex B | 100 | 92 | 100 | 95 | 100 | 90 | 100 | 92 |

Sofern nachfolgend nichts anderes benannt ist, gilt das zu Tabelle 1 oben Gesagte entsprechend.
^{b3} LBR 307, Kuraray Co., Ltd.
^{b4} Sprintan SLR-3402, Trinseo
^{e3} 3,3'-Bis(triethoxysilylpropyl)tetrasulfid (TESPT) auf Ruß im Gewichtsverhältnis 1:1, X-50S, Evonik Industries, Deutschland; entspricht ca. 8 phf
^{e4}Technical Grade aus Silanen: (C₂H₅O)₃Si-(CH₂)₃-S-(CH₂)₆-S₂-(CH₂)₆-S-(CH₂)₃-Si(OC₂H₅)₃ (gemäß DE 10 2005 044 456 A1) in Kombination mit einer Verbindung der Formel B-II) (C₂H₅O)₃Si-(CH₂)₃-S-(CH₂)₆-S-(CH₂)₃-Si(OC₂H₅)₃ (gemäß DE 10 2017 221 232 A1), Verhältnis ca. 2:1; entspricht ca. 10,7 phf
^{g} Gemisch aus CBS und TBzTD für V5, E5, V6 und E6; sonst CBS in Tab. 1 und 2

Wie bereits oben erwähnt, ist in den erfindungsgemäßen Kautschukmischungen, die sich insbesondere für Laufstreifen bzw. Laufstreifenteile sowie weitere Reifenbauteile eignen, häufig eine qualitative Leistungssteigerung in der Alterungsschutzwirkung bei gleicher Einsatzkonzentration an Alterungsschutzmittel zu beobachten, verglichen mit Kautschukmischungen enthaltend 6PPD. Es wird angenommen, dass diese Wirkung auf eine verminderte Adsorption auf der Kieselsäureoberfläche zurückzuführen ist.

Obwohl aus der WO 2023/143677 A1 bereits bekannt ist, dass eine Verbindung der Formel (II) eine längere Schutzwirkung als 6PPD gegenüber oxidativen Einflüssen bereitstellt, so war bisher nicht klar und zudem nicht erwartbar, dass insbesondere in kieselsäurehaltigen Kautschukmischungen häufig ein qualitativ verbesserter Oxidationsschutz eintreten würde.

Diese Schlussfolgerung beruht auf den in Tabelle 1 genannten Parametern "Leistungsindex A" und "B". Im Kontext der vorliegenden Erfindung bedeutet:

| | |
|---|---|
| Leistungsindex A: | Dieser Index beruht auf Härte-Messungen (DIN 53 505, Härte Shore A [ShA] bei Raumtemperatur, Konditionierte Shore-A-Härte in Anlehnung an DIN ISO 7619-1, zehnfach mit 5 MPa vorkonditioniert und anschließend nach ISO 868 geprüft). |
| | Für die Bestimmung des Leistungsindexes wurde zunächst der Wert einer ungealterten Probe mit 6PPD bestimmt; nach Abschluss der Alterung der Messwert der korrespondierenden gealterten Probe. Aus beiden Messwerten wurde eine Differenz gebildet, die eine auf den Messwert "Rückprall" beruhende absolute "Alterungsverschiebung" eines 6PPD-haltigen Prüfkörpers ergibt. Diese Differenz wurde zum Zwecke einer einfacheren Vergleichbarkeit auf einen Wert von 100 referenziert (Referenzwert; siehe V1, V2, V3, usw.). |
| | Dieses Vorgehen wurde mit einem Prüfkörper wiederholt, der auf einer erfindungsgemäßen Kautschukmischung beruht (hier enthaltend Verbindung der Formel (II)). Die aus diesen Messerwerten erhaltene Differenz wurde zum Referenzwert ins Verhältnis gesetzt (Verhältniswert; siehe E1, E2, E3, usw.). Der Verhältniswert stellt eine relative Alterungsverschiebung bezogen auf den 6PPD-enthaltenden Prüfkörper dar (siehe V1 vs. E1, V2 vs. E2, V3 vs. E3, usw.). Sowohl Referenzwert als auch Verhältniswert sind dimensionslos. Ein Verhältniswert kleiner 100 stellt eine Verbesserung dar, da das Ausmaß des Alterungseinflusses geringer ausfällt. Mit anderen Worten, ein kleinerer Wert weist darauf hin, dass die relative Alterungsverschiebung kleiner ist und somit eine qualitativ verbesserte Alterungsschutzwirkung erreicht wird, da Alterungsänderungen durch das entsprechende Alterungsschutzmittel effektiver unterbunden |
| | werden, bzw. die Alterungsreaktionen qualitativ stärker gebremst werden. |
| Leistungsindex B: | Dieser Index beruht auf Zugfestigkeits-Messungen (ASTM D 412; Messwert: M100 in [MPa], gemessen bei Raumtemperatur). Dieser Leistungsindex wurde analog zum Vorgehen wie unter "Leistungsindex A" beschrieben, bestimmt. Das dort Gesagte gilt hier entsprechend, hier jedoch beruhend auf einem Messwert aus einer Zugfestigkeitsmessung. |

Aus der WO 2023/143677 A1 ist zumindest ein verbesserter Langzeitschutz durch eine Verbindung der Formel (II) grundsätzlich bekannt und für eine rußhaltige Standardmischung gezeigt, ohne jedoch Hinweise zum Verhalten in kieselsäurehaltigen Kautschukmischungen zu geben.

Grundsätzlich zeigt sich in allen hier dargestellten Kautschukmischungen eine gegenüber 6PPD verbesserte Alterungsschutzwirkung in mindestes einem der relevanten Leistungsindizes A und B. Dies wird in erster Linie auf eine verminderte Adsorption der Acridon-Alterungsschutzmittel auf der Kieselsäureoberfläche zurückgeführt, verglichen mit 6PPD.

Tabelle 1 zeigt Ergebnisse für typische PKW-Laufstreifenmischungen, vorzugsweise für eine Cap bei einer Cap/Base Konstruktion, bei unterschiedlichen Silanen und Weichmachern, aber gleichzeitig bei einer vergleichsweise hohen Kieselsäurekonzentration von 120 phr. Hierbei ist insbesondere ein signifikanter Einfluss für den Leistungsindex B festzustellen, der typischerweise im Bereich von 3 bis 17 Punkten liegt. Eine besonders vorteilhafte Verbesserung wurde bei E2 beobachtet.

Tabelle 2 zeigt gleichermaßen typische PKW-Laufstreifenmischungen, wobei insbesondere Mischungen 7 und 8 gleichermaßen für Seitenwände, Hornprofile und Apexe eingesetzt werden. Diese Vielfältigkeit in der Verwendung verbunden mit einem messbar verbesserten Alterungsschutz in solchen kieselsäurehaltigen Kautschukmischungen ist durchaus vorteilhaft.

Die vorliegenden Ergebnisse zeigen, dass bei mit 6PPD vergleichbaren Arbeitskonzentrationen entweder ein weiter verbesserter Schutz erzielt werden kann oder bei Einsatz geringerer Mengen zumindest ein weitestgehend gleichwertiger Schutz. Da zukünftig insbesondere mit extremeren klimatischen Bedingungen gerechnet werden muss, die einen erhöhten Anspruch an den Alterungsschutz von Reifen stellen, dürfte es durchaus von Vorteil sein, bei gleicher Arbeitskonzentration einen qualitativ besseren Alterungsschutz zu erzielen.

## Patentansprüche

1. Eine schwefelvernetzbare Kautschukmischung für ein Reifenbauteil oder Teil eines Reifenbauteils, die Mischung umfassend
(a) einen oder mehr als einen Polyisopren-Kautschuk in einer Gesamtmenge in einem Bereich von 0 bis 70 phr;
(b) in einer Gesamtmenge in einem Bereich von 30 bis 100 phr, einen oder mehr als einen von (a) verschiedenen Dienkautschuk ausgewählt aus der Gruppe bestehend aus Butadien-Kautschuke (BR) und Styrol-Butadien-Kautschuke (SBR), mit der Maßgabe, dass
- die Kautschukmischung eine Gesamtmenge von 25 bis 90 phr Styrol-Butadien-Kautschuk umfasst, und
- die Gesamtmenge aus (a) und (b) 100 phr beträgt;
(c) eine oder mehr als eine Verbindung der Formel (I) 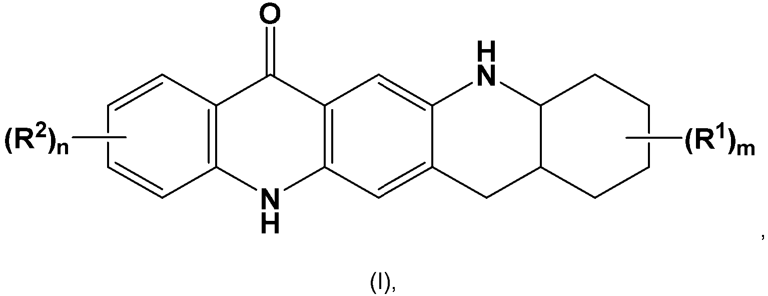 wobei
R¹ an der äußeren Cyclohexan-Gruppe und/oder der benachbarten Piperidin-Gruppe gebunden ist und unabhängig voneinander ausgewählt ist aus der Gruppe bestehend aus
xi) C₁- bis C₄-Alkyl-Resten und C₁- bis C₄-Alkoxy-Resten,
und
der Rest R² unabhängig voneinander ausgewählt ist aus der Gruppe bestehend aus
aliphatischen C₁- bis C₁₂-Resten, aromatischen Resten, Halogen-Resten, Cyano-Resten, Ester-Resten, Keton-Resten, Ether-Resten und Thioether-Resten,
und wobei
n den Wert 0 oder 1 oder 2 oder 3 oder 4 annimmt und die Reste R² im Fall von n gleich 2 oder 3 oder 4 unabhängig voneinander gleich oder verschieden sind, und
m eine ganze Zahl in einem Bereich von 1 bis 12 ist, wobei die Reste R¹ im Fall von m gleich 2 oder größer unabhängig voneinander gleich oder verschieden sind; und
(d) eine oder mehr als eine Kieselsäure als Füllstoff in einer Gesamtmenge in einem Bereich von 50 bis 250 phr.

2. Kautschukmischung nach Anspruch 1, wobei gilt:
für (a) eine Gesamtmenge von 0 bis 30 phr; und
für (b) eine Gesamtmenge von 70 bis 100 phr, mit der Maßgabe, dass die Kautschukmischung eine Gesamtmenge von 65 bis 90 phr Styrol-Butadien-Kautschuk umfasst.

3. Kautschukmischung nach Anspruch 1 oder 2, wobei für die Gesamtmenge von (a) gilt, dass sie entweder 0 (Null) ist oder als Untergrenze größer 0 (Null) ist, vorzugsweise 5 phr oder größer.

4. Kautschukmischung nach einem der Ansprüche 1 bis 3, wobei die Gesamtmenge von (d) in einem Bereich von 60 bis 210 phr liegt, vorzugsweise von 70 bis 175 phr, besonders bevorzugt von 80 bis 150 phr, am bevorzugtesten von 90 bis 130 phr.

5. Kautschukmischung nach Anspruch 1, wobei gilt:
für (a) eine Gesamtmenge von 45 bis 70 phr; und
für (b) eine Gesamtmenge von 30 bis 55 phr, mit der Maßgabe, dass die Kautschukmischung eine Gesamtmenge von 25 bis 50 phr Styrol-Butadien-Kautschuk umfasst.

6. Kautschukmischung nach Anspruch 1 oder 5, wobei die Gesamtmenge (d) in einem Bereich von 50 bis 90 phr liegt, vorzugsweise von 53 bis 82 phr, besonders bevorzugt von 56 bis 74 phr, am bevorzugtesten von 59 bis 69 phr.

7. Kautschukmischung nach einem der Ansprüche 1 bis 6 zusätzlich umfassend als weiteren Füllstoff 0 (Null) bis 5 phr Ruß, vorzugsweise 0 (Null) bis 3 phr, besonders bevorzugt 0 (Null) bis 1,5 phr, ganz besonders bevorzugt 0 (Null) phr.

8. Kautschukmischung nach einem der Ansprüche 1 bis 7, wobei in der Verbindung gemäß Formel (I) n gleich 0 (Null) ist.

9. Kautschukmischung nach einem der Ansprüche 1 bis 8, wobei in Formel (I) R¹ ausgewählt ist aus der Gruppe bestehend aus
C₁- bis C₃-Alkylresten, vorzugsweise C₁- bis C₂-Alkylresten, besonders bevorzugt Methyl-Resten;
und/oder
m eine ganze Zahl in einem Bereich von 1 bis 10 ist, vorzugsweise von 2 bis 8, besonders bevorzugt von 2 bis 6, ganz besonders bevorzugt von 3 bis 6, am bevorzugtesten von 3 bis 4.

10. Kautschukmischung nach einem der Ansprüche 1 bis 9, wobei in Formel (I) m 2 oder größer ist, R¹ identisch ist und einen Methyl-Rest bedeutet, wobei mindestens zwei Methylreste an dasselbe Kohlenstoffatom gebunden sind.

11. Kautschukmischung nach einem der Ansprüche 1 bis 10, wobei die Verbindung der
Formel (I) gemäß (c) eine Struktur der Formel (II) aufweist

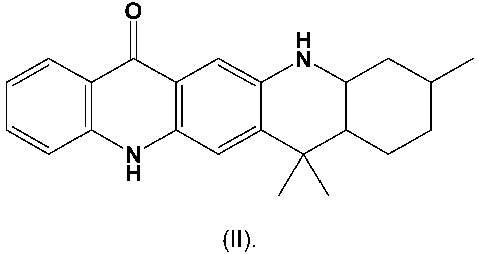

12. Ein Vulkanisat umfassend oder bestehend aus der schwefelvernetzbaren Kautschukmischung nach einem der Ansprüche 1 bis 11, wobei das Vulkanisat durch Schwefelvulkanisation resultiert.

13. Ein Reifenbauteil umfassend oder bestehend aus dem Vulkanisat gemäß Anspruch 12.

14. Reifenbauteil gemäß Anspruch 13, wobei das Reifenbauteil ein Laufstreifen, vorzugsweise eine Cap, eine Seitenwand, ein Hornprofil oder ein Apex ist.

15. Einen Fahrzeugreifen, vorzugsweise ein Fahrzeugluftreifen, der ein, zwei oder mehr als zwei Reifenbauteile nach einem der Ansprüche 13 oder 14 aufweist.
